# EUROPEAN PATENT APPLICATION

(11) **EP 4 386 550 A1**
(43) Date of publication of application: **19.06.2024**
(21) Application number: 22874489.2
(22) Date of filing: 22.08.2022
(51) Int. Cl.: G06F 9/50

(54) **METHOD FOR ACCESSING RESOURCES, AND ELECTRONIC DEVICE**

(30) Priority: 29.09.2021 CN 202111153026
(71) Applicant: Huawei Technologies Co., Ltd., Shenzhen, Guangdong 518129 (CN)
(72) Inventor: CHEN, Gang, Shenzhen, Guangdong 518129 (CN); ZHANG, Zhengya, Shenzhen, Guangdong 518129 (CN); HUANG, Chao, Shenzhen, Guangdong 518129 (CN)
(74) Representative: Pfenning, Meinig & Partner mbB
(86) International application number: PCT/CN2022/114006
(87) International publication number: WO 2023/051096

(57) **Abstract**

A resource access method and an electronic device are provided, and relate to the field of terminal technologies. The method is applied to a first device, and includes: obtaining a first resource ID; determining a second device corresponding to the first resource ID, and determining a second resource ID corresponding to the first resource ID, where the second resource ID is a local resource ID, in the second device, of a first resource corresponding to the first resource ID; and accessing, from the second device based on the second resource ID, the first resource corresponding to the first resource ID. This technical solution can implement cross-device resource access.

## Description

This application claims priority to Chinese Patent Application No. 202111153026.6, filed with the China National Intellectual Property Administration on September 29, 2021 and entitled "RESOURCE ACCESS METHOD AND ELECTRONIC DEVICE", which is incorporated herein by reference in its entirety.

### TECHNICAL FIELD

This application relates to the field of terminal technologies, and in particular, to a resource access method and an electronic device.

### BACKGROUND

With continuous development of terminal technologies, various electronic devices are gradually widely used. The electronic device may store various resources, and can also access these resources, for example, opening a picture or playing a video.

In the conventional technology, each resource in the electronic device has a corresponding resource identity (identity, ID). Therefore, the electronic device may access, based on any resource ID, a resource corresponding to the resource ID.

However, because the resource ID can identify only a local resource of the electronic device, resource IDs of different resources in two electronic devices may be the same. As a result, the electronic device can access only the local resource of the electronic device, and cannot access a resource of another device in a cross-device manner.

### SUMMARY

In view of this, this application provides a resource access method and an electronic device, to implement cross-device resource access.

To achieve the foregoing objective, according to a first aspect, an embodiment of this application provides a resource access method, applied to a first device, and including:
obtaining a first resource ID;
determining a second device corresponding to the first resource ID, and determining a second resource ID corresponding to the first resource ID, where the second resource ID is a local resource ID, in the second device, of a first resource corresponding to the first resource ID; and
accessing, from the second device based on the second resource ID, the first resource corresponding to the first resource ID.

In this embodiment of this application, the first device may determine the first resource ID of the first resource, determine the second device corresponding to the first resource ID, and determine the second resource ID corresponding to the first resource ID. The second resource ID is the local resource ID of the first resource in the second device. In addition, the first device may access the first resource from the second device based on the second resource ID, to implement device interconnection and resource sharing.

Optionally, the determining a second device corresponding to the first resource ID includes:
if the first resource ID belongs to a first ID index segment corresponding to the second device, determining that the first resource ID corresponds to the second device.

Optionally, the determining a second resource ID corresponding to the first resource ID includes:
determining a second ID index segment corresponding to the first device;
determining an offset between the second ID index segment and the first ID index segment corresponding to the second device; and
offsetting the first resource ID based on the offset to obtain the second resource ID.

The offset may indicate an offset degree between resource IDs that have a mapping relationship and that are in the first ID index segment and the second ID index segment. For example, if the first ID index segment is 3 *10⁸ to 4 *10⁸, and the second ID index segment is 0 to 1*10⁸, the offset is 3*10⁸-0=3*10⁸. A resource ID, in the first ID index segment, that is obtained after a resource ID in the second ID index segment is offset may be obtained by adding 3*10⁸ to the resource ID.

Optionally, the determining a second resource ID corresponding to the first resource ID includes:
obtaining, from a resource ID correspondence, the second resource ID corresponding to the first resource ID, where the resource ID correspondence indicates a correspondence between a local resource ID and a global resource ID, the local resource ID includes the second resource ID, and the global resource ID includes the first resource ID.

It should be noted that, when mapping the second resource ID to the first resource ID, the first device may first determine the first ID index segment corresponding to the second device and the second ID index segment corresponding to the first device, and then offset, based on the offset between the first ID index segment and the second ID index segment, the second resource ID to obtain the first resource ID. Correspondingly, the first resource ID may be offset to obtain the second resource ID. However, in some other embodiments, when mapping the second resource ID to the first resource ID, the first device may not first determine the first ID index segment corresponding to the second device, but determine, in another manner (for example, randomly selecting an unused resource ID from the second ID index segment as the first resource ID), the first resource ID corresponding to the second resource ID, and store a resource ID correspondence, so that the second resource ID corresponding to the first resource ID can be determined based on the resource ID correspondence. In this case, the first resource ID and another global resource ID obtained in a similar manner may form the first ID index segment. Certainly, even when mapping the second resource ID to the first resource ID, the first device may first determine the first ID index segment corresponding to the second device and the second ID index segment corresponding to the first device, then offset, based on the offset between the first ID index segment and the second ID index segment, the second resource ID to obtain the first resource ID, and store the first resource ID and the second resource ID in the resource ID correspondence, so that the second resource ID corresponding to the first resource ID may be subsequently determined based on the resource ID correspondence.

Optionally, before the determining a second resource ID corresponding to the first resource ID, the method further includes:
obtaining metadata of the first resource from the second device, where the metadata includes the second resource ID of the first resource; and
determining the first resource ID corresponding to the second resource ID.

The first device may allocate the first ID index segment corresponding to the second device, and obtain metadata of a third resource in the second device. The metadata includes a local resource ID of the third resource in the second device. The first device maps the local resource ID of the third resource to a global resource ID, to avoid a problem that the local resource ID of the third resource in the second device is duplicate with a local resource ID of another local resource in the first device, so that the first device can access the third resource in the second device in a cross-device manner. Different ID index segments identify different devices, and this facilitates smooth extension of a uniform resource identifier (uniform resource identifier, URI). A northbound interface does not need to be modified, so that an upper-layer application can perform cross-device access without additional configuration.

Optionally, before the determining the first resource ID corresponding to the second resource ID, the method further includes:
allocating the first ID index segment to the second device.

The determining the first resource ID corresponding to the second resource ID includes:
determining, based on the first ID index segment, the first resource ID corresponding to the second resource ID.

Optionally, the allocating the first ID index segment to the second device includes:
allocating the first ID index segment to the second device based on a device type of the second device.

Optionally, the allocating the first ID index segment to the second device includes:
obtaining an idle third ID index segment from an index resource pool, where the index resource pool includes at least one third ID index segment; and
determining the idle third ID index segment as the first ID index segment corresponding to the second device.

The first device may set the index resource pool, and the index resource pool includes at least one third ID index segment and allocation status information corresponding to each third ID index segment. The allocation status information of the third ID index segment may indicate whether a current state of the third ID index segment is allocated or idle. If the current state is allocated, the allocation status information further indicates a device ID of an electronic device corresponding to the third ID index segment. Therefore, the first device may obtain allocation status information corresponding to each third ID index segment from the index resource pool, and determine, based on the allocation status information, whether the third ID index segment is idle.

It should be noted that each third ID index segment may include a plurality of resource IDs, and the plurality of resource IDs may be consecutive, or may be inconsecutive. A quantity of resource IDs included in different third ID index segments may be the same or different. Two adjacent third ID index segments may be consecutive or inconsecutive.

In some embodiments, if the first device does not set the device type corresponding to the third ID index segment, the first device may obtain any idle third ID index segment, and determine the idle third ID index segment as the first ID index segment corresponding to the second device.

In some embodiments, if the first device obtains at least one third ID index segment based on the device type of the electronic device, the first device may obtain, based on the device type of the second device, an idle third ID index segment corresponding to the device type, and determine the idle third ID index segment as the first ID index segment corresponding to the second device.

In some embodiments, if no idle third ID index segment exists currently, the first device may add a device ID of the second device to a to-be-allocated device queue.

The to-be-allocated device queue may include a device ID of at least one electronic device to which an ID index segment is to be allocated.

Optionally, the allocating the first ID index segment to the second device includes:
if it is detected that the second device goes online, updating allocation status information of the first ID index segment to "allocated", and adding the device ID of the second device to the allocation status information.

The method further includes:
if it is detected that the second device goes offline and no to-be-allocated third device exists, updating the allocation status information of the first ID index segment to "idle", and deleting the device ID of the second device from the allocation status information; or
if it is detected that the second device goes offline but a to-be-allocated third device exists, updating the device ID of the second device in the allocation status information to a device ID of the third device.

The first device may obtain the device ID of the third device from the to-be-allocated device queue.

The first device may query allocation status information of each third ID index segment. If the allocation status information of any third ID index segment is "allocated" and includes the device ID of the second device, the third ID index segment allocated to the first ID index segment of the second device.

In some embodiments, if a device type is correspondingly set in the third ID index segment, when detecting that the second device goes offline but a to-be-allocated third device that has the same device type as the first device exists, the first device may update the device ID of the second device in the allocation status information to the device ID of the third device.

In some embodiments, when the second device is offline, the first ID index segment may not be allocated to the second device, and the second device still waits for allocation in the to-be-allocated device queue. Therefore, the device ID of the second device may be directly deleted from the to-be-allocated device queue.

In some embodiments, the first device may update the index resource pool based on an allocation process of the third ID index segment, including at least one of the following: If the first device allocates an idle third ID index segment to the second device, the first device may update the allocation status of the first ID index segment from idle to "allocated", and add the device ID of the second device to the allocation status information corresponding to the first ID index segment; if the first device reclaims the first ID index segment that is allocated to the second device, the first device may update the allocation status of the first ID index segment from "allocated" to "idle", and delete the device ID of the second device from the allocation status information corresponding to the first ID index segment; and if the first device allocates the first ID index segment that is allocated to the second device to the third device, the first device may update the device ID of the second device in the allocation status information corresponding to the first ID index segment to the device ID of the third device.

The first device may allocate the corresponding first ID index segment to the second device when the second device is online, or may reclaim the first ID index segment allocated to the second device when the second device is offline, and update the index resource pool in time. In this way, a same ID index segment may be multiplexed to a plurality of devices in different time periods. In this case, when the first device discovers that a new device is online, the first device can allocate a corresponding ID index segment to the device, to perform cross-device access on a resource in the device, so as to increase a cross-device access range.

In addition, a range in which the first device needs to perform cross-device access may be small. For example, in a personal home scenario, a total quantity of devices is small and fixed. A quantity of third ID index segments is greater than or equal to the total quantity of devices. Therefore, an allocated third ID index segment does not need to be reclaimed. Correspondingly, the first device may allocate the first ID index segment to the second device only when the first device discovers that the second device is online for the first time. If the first device discovers that the second device is online again later, the first device does not need to allocate the ID index segment again.

Optionally, the first resource is a multimedia resource, and the obtaining a first resource ID includes:
if a first obtaining operation is detected, determining the first resource ID and a first quality parameter based on the first obtaining operation, where the first obtaining operation is used to obtain a thumbnail of the multimedia resource.

If the first device does not locally store a first thumbnail, or if the first device locally stores the first thumbnail but picture quality indicated by the first quality parameter is better than picture quality of the first thumbnail, the accessing, from the second device based on the second resource ID, the first resource corresponding to the first resource ID includes:
obtaining a second thumbnail from the second device based on the second resource ID, where picture quality of the second thumbnail is better than or equal to the picture quality indicated by the first quality parameter; and
obtaining a file descriptor (FD) of the second thumbnail.

The FD may also be referred to as a file handle.

When the first device locally stores the first thumbnail, the first device may compare the first quality parameter with a second quality parameter of the first thumbnail. If the picture quality indicated by the first quality parameter is better than or equal to picture quality indicated by the second quality parameter, the quality of the first thumbnail can meet a quality requirement of the thumbnail that needs to be obtained in the first obtaining operation. If the picture quality indicated by the first quality parameter is worse than the picture quality indicated by the second quality parameter, the quality of the first thumbnail cannot meet the quality requirement of the thumbnail that needs to be obtained in the first obtaining operation.

In some embodiments, the first quality parameter may indicate quality of a to-be-obtained thumbnail. In some embodiments, the first quality parameter may include at least one of a first picture resolution or a first picture size. The picture resolution refers to a quantity of pixels in a unit area of a picture, that is, a pixel density. The picture size is pixel values included in a length and a width of a picture, and may be expressed as M pixels * N pixels. Certainly, during actual application, the first quality parameter may include more or fewer types of parameters that indicate picture quality. A type of the first quality parameter is not specifically limited in embodiments of this application.

In some embodiments, the second quality parameter may include a second picture resolution, and then the second picture resolution may be compared with the first picture resolution. If the first picture resolution is greater than the second picture resolution, the first device may determine that the picture quality indicated by the first quality parameter is better than the picture quality of the first thumbnail. If the first picture resolution is less than or equal to the second picture resolution, the first device may determine that the picture quality of the first thumbnail is better than or equal to the picture quality indicated by the first quality parameter.

In some embodiments, the second quality parameter may include a second picture size, and then the second picture size may be compared with the first picture size. If the first picture size is greater than the second picture size, the first device may determine that the picture quality indicated by the first quality parameter is better than the picture quality of the first thumbnail. If the first picture size is less than or equal to the second picture size, the first device may determine that the picture quality of the first thumbnail is better than or equal to the picture quality indicated by the first quality parameter.

Optionally, the method further includes:
if the first device locally stores the first thumbnail, and the picture quality of the first thumbnail is better than or equal to the picture quality indicated by the first quality parameter, locally obtaining an FD of the first thumbnail from the first device based on the first resource ID.

In embodiments of this application, if obtaining the first obtaining operation, the first device may determine the first resource ID and the first quality parameter based on the first obtaining operation. The first device may further determine whether the first resource ID is a local resource ID or a global resource ID. If the first resource ID is the global resource ID, that is, the first resource is a global resource, the first device may determine, based on the first quality parameter, whether the locally stored first thumbnail meets the quality requirement of the thumbnail that needs to be obtained in the first obtaining operation. If the locally stored first thumbnail meets the quality requirement of the thumbnail that needs to be obtained in the first obtaining operation, the first device may locally access the first thumbnail. Alternatively, if the locally stored first thumbnail does not meet the quality requirement of the thumbnail that needs to be obtained in the first obtaining operation or the first device does not locally store the first thumbnail, the first device may access the second thumbnail from the second device through cross-device access. That is, cross-device access can be reduced through thumbnail proxy, and access efficiency and user experience can be improved.

Optionally, the first resource is a multimedia resource, and the obtaining a first resource ID includes:
detecting a second obtaining operation, where the second obtaining operation is used to obtain an original picture of the multimedia resource.

Before the accessing, from the second device based on the second resource ID, the first resource corresponding to the first resource ID, the method further includes:
determining that the first device does not locally store cached data of the multimedia resource.

The accessing, from the second device based on the second resource ID, the first resource corresponding to the first resource ID includes:
obtaining the cached data of the multimedia resource from the second device based on the second resource ID.

Optionally, the method further includes:
obtaining a logical FD of the multimedia resource.

In embodiments of this application, if obtaining the second obtaining operation, the first device may determine whether the first resource ID is a local resource ID or a global resource ID. If the first resource ID is the global resource ID, that is, the first resource is a global resource, the first device may locally access the cached data of the first resource. When the first device does not store the cached data of the first resource, the first device may access the first resource from the second device through cross-device access, to implement device interconnection and data sharing.

Optionally, the accessing, from the second device based on the second resource ID, the first resource corresponding to the first resource ID includes:
generating a first global content URI based on the second resource ID; and
accessing the first resource from the second device based on the first global content URI.

The first device may send a first access request to the second device, where the first access request carries the first global content URI and an operation instruction. The second device locates the first resource based on a content type, a path, and the second resource ID that are carried in the first global content URI, performs an operation on the first resource based on the operation instruction, and feeds back an operation result to the first device.

Optionally, the first global content URI carries at least one of a first modification time and first version information, where the first modification time indicates a modification time of the first resource, and the first version information indicates a version of the first resource. Correspondingly, the second device may obtain the first resource based on at least one of the first modification time and the first version information.

Optionally, the first global content URI carries at least one of a first access account and a first target account, where the first access account indicates a user identity that accesses the first resource, and the first target account indicates a user identity to which the first resource belongs. Correspondingly, if the first global content URI includes the first access account, the second device may verify the first access account. If the first access account has a permission to access the second device, it is determined that the verification succeeds, so that the second device responds to the first access request. If the first access account does not have the permission to access the second device, it is determined that the verification fails, so that the second device does not respond to the first access request. If the first global content URI includes the first target account, the second device may verify the first target account. If it is determined that the first target account corresponds to the second device, it is determined that the verification succeeds, so that the second device responds to the first access request. If it is determined that the first target account does not correspond to the second device, it is determined that the verification fails, so that the second device does not respond to the first access request. If the first global content URI includes the first access account and the first target account, the second device may verify the first access account and the first target account. If it is determined that the first target account corresponds to the second device, and the first access account has a permission to access the first target account, it is determined that the verification succeeds, so that the second device responds to the first access request. If it is determined that the first target account does not correspond to the second device, and the first access account does not have the permission to access the first target account, it is determined that the verification fails, so that the second device does not respond to the first access request.

Optionally, the first global content URI carries a first encrypted device ID, and the first encrypted device ID is obtained by the first device by encrypting the device ID of the second device based on the device ID of the second device. Correspondingly, the second device may decrypt the first encrypted device ID based on the device ID of the second device. If the decryption succeeds and the device ID of the second device is obtained through the decryption, the second device determines that the first resource is a resource in the second device, so that the second device responds to the first access request. Otherwise, the second device does not respond to the first access request.

Data format of the global content URI may be:
content://[access account (oper-name)]:[target account (dest-name)]@[encrypted receiving device ID (device-id(encrypted)]?[modification time (modifiedDate)]#[version information magic number (magic)]/[provider]/[path]/[group]/[local resource ID].

The access account indicates a user identity that accesses a resource. The target account indicates a user identity to which the resource belongs. The access account and the target account can be an account that is currently logged in or an account that is not currently logged in. The encrypted device ID may be used by a device receiving a global content URI to verify the device in which the resource is located and a device receiving the global content URI. The encrypted device ID may be obtained by encrypting a device ID of a receiving device (that is, the device receiving the first global content URI) based on a device ID of a target device. The target device and the receiving device may be a same device. The encrypted device ID can prevent an application from sensing and collecting the device ID, reduce a problem of user privacy leakage, and improve security of an access process. The version information magic number may indicate version information of a first resource. Because the device ID of the target device is used as an encrypted key, key agreement does not need to be performed, and a problem of key fixing is avoided. The modification time prevents access to a resource whose modification time is incorrect and ensures consistency of accessed resource content. The version information magic number prevents access to a resource of an incorrect version and ensures consistency of an accessed resource version.

Optionally, if the first resource ID belongs to the second ID index segment corresponding to the first device, the FD of the first resource is locally obtained from the first device based on the first resource ID.

Optionally, the method further includes:
obtaining a second global content URI;
adding at least one of a second access account, a second target account, a second encrypted device ID, a second modification time, and second version information to the second global content URI, to obtain a third global content URI; and
accessing a second resource from a fourth device based on the third global content URI.

The second access account indicates a user identity that accesses the second resource, the second target account indicates a user identity to which the second resource belongs, the second modification time indicates a modification time of the second resource, the second version information indicates a version of the second resource, and the second encrypted device ID is obtained by the first device by encrypting a device ID of the fourth device based on the device ID of the fourth device.

Optionally, the second global content URI includes a third encrypted device ID. Before the adding a second encrypted device ID to the second global content URI, the method further includes:
decrypting the third encrypted device ID based on device IDs of a plurality of online fifth devices; and
if the third encrypted device ID is successfully decrypted based on the device ID of the fourth device, and a device ID of the first device is obtained through decryption, encrypting the device ID of the fourth device based on the device ID of the fourth device, to obtain the second encrypted device ID, where the fourth device is any one of the plurality of fifth devices.

The adding a second encrypted device ID to the second global content URI includes:
updating the third encrypted device ID in the second global content URI to the second encrypted device ID.

Optionally, the adding a second access account to the second global content URI includes:
if the second global content URI does not include a third access account, adding the second access account to the second global content URI. If the second global content URI includes the third access account, the first device may update the third access account in the second global content URI to the second access account. In some other embodiments, if the second global content URI includes the third access account, the first device may not update the third access account, and the third global content URI still includes the third access account. Alternatively, it may also be understood that the second access account included in the third global content URI is the same as the third access account.

Optionally, the adding a second target account to the second global content URI includes:
if the second global content URI does not include a third target account, adding the second target account to the second global content URI. If the second global content URI includes the third target account, the first device may replace the third target account in the second global content URI in the first device with the second target account. In some other embodiments, if the second global content URI includes the third target account, the first device may not update the third target account, and the third global content URI still includes the third target account. Alternatively, it may also be understood that the second target account included in the third global content URI is the same as the third target account.

Optionally, the adding a second modification time and/or second version information to the second global content URI includes:
if the second global content URI does not include a third modification time, adding the second modification time to the second global content URI, which may also be understood as that the second modification time included in the third global content URI is the same as the third modification time; and/or
if the second global content URI does not include third version information, adding the second version information to the second global content URI, which may also be understood as that the second version information included in the third global content URI is the same as the third version information.

In some embodiments, the fourth device may decrypt the second encrypted device ID based on device IDs of a plurality of online seventh devices, where the plurality of seventh devices may include the fourth device. If the decryption based on the device ID of the fourth device succeeds and the device ID of the fourth device is obtained through the decryption, the fourth device determines that the second resource is a resource in the fourth device, and responds to the access of the first device. Otherwise, the fourth device may not respond to the access of the first device.

In some embodiments, if the second global content URI includes any one of the second access account and the third access account, and/or any one of the second target account and the third target account, the fifth device may further verify either of the second access account and the third access account, and/or either of the second target account and the third target account in a manner in which the first device verifies the first access account and the first target account. If the verification succeeds, the fifth device responds to the access of the first device. Otherwise, the fifth device does not respond to the access of the first device.

In some embodiments, the fourth device may obtain the second resource based on at least one of the second modification time and the second version information.

In this embodiment of this application, when obtaining the second global content URI, the first device may add at least one of the second access account, the second target account, the second encrypted device ID, the second modification time, and the second version information to the second global content URI, to obtain the third global URI, and then access the second resource from the fourth device based on the third global content URI. Because the third global content URI may include the third encrypted device ID, the fourth device may verify a device that shares the resource and a device that receives the third global content URI, so that cross-device access security can be ensured, and key agreement does not need to be performed, to avoid a problem of key fixing. Because the third global content URI may include the second access account and the second target account, it is convenient for the fourth device to perform authentication on a user identity that accesses and a user identity that is accessed, so that cross-device access security is improved. Because the third global content URI may include the second modification time and the second version information, consistency of resource content and resource versions in cross-device access is ensured.

According to a second aspect, an embodiment of this application provides a resource access method, applied to a first device, and including:
obtaining a second global content URI;
adding at least one of a second access account, a second target account, a second encrypted device ID, a second modification time, and second version information to the second global content URI, to obtain a third global content URI; and
accessing a second resource from a fourth device based on the third global content URI.

The second access account indicates a user identity that accesses the second resource, the second target account indicates a user identity to which the second resource belongs, the second modification time indicates a modification time of the second resource, the second version information indicates a version of the second resource, and the second encrypted device ID is obtained by the first device by encrypting a device ID of the fourth device based on the device ID of the fourth device.

In this embodiment of this application, when obtaining the second global content URI, the first device may add at least one of the second access account, the second target account, the second encrypted device ID, the second modification time, and the second version information to the second global content URI, to obtain the third global URI, and then access the second resource from the fourth device based on the third global content URI. Because the third global content URI may include a third encrypted device ID, the fourth device may verify a device that shares the resource and a device that receives the third global content URI, so that cross-device access security can be ensured, and key agreement does not need to be performed, to avoid a problem of key fixing. Because the third global content URI may include the second access account and the second target account, it is convenient for the fourth device to perform authentication on a user identity that accesses and a user identity that is accessed, so that cross-device access security is improved. Because the third global content URI may include the second modification time and the second version information, consistency of resource content and resource versions in cross-device access is ensured.

Optionally, the second global content URI includes the third encrypted device ID. Before the adding a second encrypted device ID to the second global content URI, the method further includes:
decrypting the third encrypted device ID based on device IDs of a plurality of online fifth devices; and
if the third encrypted device ID is successfully decrypted based on the device ID of the fourth device, and a device ID of the first device is obtained through decryption, encrypting the device ID of the fourth device based on the device ID of the fourth device, to obtain the second encrypted device ID, where the fourth device is any one of the plurality of fifth devices.

The adding a second encrypted device ID to the second global content URI includes:
updating the third encrypted device ID in the second global content URI to the second encrypted device ID.

Optionally, the adding a second access account to the second global content URI includes:
if the second global content URI does not include a third access account, adding the second access account to the second global content URI. If the second global content URI includes the third access account, the first device may update the third access account in the second global content URI to the second access account. In some other embodiments, if the second global content URI includes the third access account, the first device may not update the third access account, and the third global content URI still includes the third access account. Alternatively, it may also be understood that the second access account included in the third global content URI is the same as the third access account.

Optionally, the adding a second target account to the second global content URI includes:
if the second global content URI does not include a third target account, adding the second target account to the second global content URI. If the second global content URI includes the third target account, the first device may replace the third target account in the second global content URI in the first device with the second target account. In some other embodiments, if the second global content URI includes the third target account, the first device may not update the third target account, and the third global content URI still includes the third target account. Alternatively, it may also be understood that the second target account included in the third global content URI is the same as the third target account.

Optionally, the adding a second modification time and/or second version information to the second global content URI includes:
if the second global content URI does not include a third modification time, adding the second modification time to the second global content URI, which may also be understood as that the second modification time included in the third global content URI is the same as the third modification time; and/or
if the second global content URI does not include third version information, adding the second version information to the second global content URI, which may also be understood as that the second version information included in the third global content URI is the same as the third version information.

In some embodiments, if the second global content URI includes the second encrypted device ID, the fourth device may decrypt the second encrypted device ID based on device IDs of a plurality of online seventh devices, where the plurality of seventh devices may include the fourth device. If the decryption based on the device ID of the fourth device succeeds and the device ID of the fourth device is obtained through the decryption, the fourth device determines that the second resource is a resource in the fourth device, and responds to the access of the first device. Otherwise, the fourth device may not respond to the access of the first device.

In some embodiments, if the second global content URI includes any one of the second access account and the third access account, and/or any one of the second target account and the third target account, the fifth device may further verify either of the second access account and the third access account, and/or either of the second target account and the third target account in a manner in which the first device verifies the first access account and the first target account. If the verification succeeds, the fifth device responds to the access of the first device. Otherwise, the fifth device does not respond to the access of the first device.

In some embodiments, the fourth device may obtain the second resource based on at least one of the second modification time and the second version information.

According to a third aspect, an embodiment of this application provides a resource access method, applied to a fourth device, and including:
receiving a second access request of a first device, where the second access request carries a third global content URI, and the third global content URI includes at least one of a second access account, a second target account, a second encrypted device ID, a second modification time, and second version information, to obtain the third global content URI; and
responding, based on the third global content URI, to the access of the first device to a second resource.

The second access account indicates a user identity that accesses the second resource, the second target account indicates a user identity to which the second resource belongs, the second modification time indicates a modification time of the second resource, the second version information indicates a version of the second resource, and the second encrypted device ID is obtained by the first device by encrypting a device ID of the fourth device based on the device ID of the fourth device.

In some embodiments, if a second global content URI includes the second encrypted device ID, the fourth device may decrypt the second encrypted device ID based on device IDs of a plurality of online seventh devices, where the plurality of seventh devices may include the fourth device. If the decryption based on the device ID of the fourth device succeeds and the device ID of the fourth device is obtained through the decryption, the fourth device determines that the second resource is a resource in the fourth device, and responds to the access of the first device. Otherwise, the fourth device may not respond to the access of the first device.

In some embodiments, if the second global content URI includes any one of the second access account and a third access account, and/or any one of the second target account and a third target account, a fifth device may further verify either of the second access account and the third access account, and/or either of the second target account and the third target account in a manner in which the first device verifies a first access account and a first target account. If the verification succeeds, the fifth device responds to the access of the first device. Otherwise, the fifth device does not respond to the access of the first device.

In some embodiments, the fourth device may obtain the second resource based on at least one of the second modification time and the second version information.

According to a fourth aspect, an embodiment of this application provides a resource access apparatus, where the apparatus is included in an electronic device, and the apparatus has a function of implementing behaviors of the electronic device in the foregoing aspects and the possible implementations of the foregoing aspects. The function may be implemented by hardware, or may be implemented by hardware executing corresponding software. The hardware or the software includes one or more modules or units corresponding to the foregoing function, for example, a transceiver module or unit, a processing module or unit, or an obtaining module or unit.

According to a fifth aspect, an embodiment of this application provides a resource access system, including a first device and a fourth device.

The first device obtains a second global content URI.

The first device adds at least one of a second access account, a second target account, a second encrypted device ID, a second modification time, and second version information to the second global content URI, to obtain a third global content URI.

The first device sends a second access request to the fourth device, where the second access request carries the third global content URI.

The fourth device responds, based on the third global content URI, to the access of the first device to a second resource.

The second access account indicates a user identity that accesses the second resource, the second target account indicates a user identity to which the second resource belongs, the second modification time indicates a modification time of the second resource, the second version information indicates a version of the second resource, and the second encrypted device ID is obtained by the first device by encrypting a device ID of the fourth device based on the device ID of the fourth device.

According to a sixth aspect, an embodiment of this application provides an electronic device, including a memory and a processor. The memory is configured to store a computer program. The processor is configured to perform, when invoking the computer program, the method according to any one of the implementations of the first aspect, and/or any one of the implementations of the second aspect, and/or any one of the implementations of the third aspect.

According to a seventh aspect, an embodiment of this application provides a chip system. The chip system includes a processor. The processor is coupled to a memory. The processor executes a computer program stored in the memory, to implement the method according to any one of the implementations of the first aspect, and/or any one of the implementations of the second aspect, and/or any one of the implementations of the third aspect.

The chip system may be a single chip or a chip module including a plurality of chips.

According to an eighth aspect, an embodiment of this application provides a computer-readable storage medium. The computer-readable storage medium stores a computer program. When the computer program is executed by a processor, the method according to any one of the implementations of the first aspect, and/or any one of the implementations of the second aspect, and/or any one of the implementations of the third aspect.

According to a ninth aspect, an embodiment of this application provides a computer program product. When the computer program product runs on an electronic device, the electronic device is enabled to perform the method according to any one of the implementations of the first aspect, and/or any one of the implementations of the second aspect, and/or any one of the implementations of the third aspect.

It may be understood that, for beneficial effects of the fourth aspect to the ninth aspect, refer to the related descriptions in the first aspect and the second aspect. Details are not described herein again.

### BRIEF DESCRIPTION OF DRAWINGS

FIG. 1 is a schematic diagram of a structure of an electronic device according to an embodiment of this application;
FIG. 2 is a schematic diagram of a structure of a distributed system according to an embodiment of this application;
FIG. 3 is a block diagram of a software structure of an electronic device according to an embodiment of this application;
FIG. 4 is a flowchart of a resource ID mapping method according to an embodiment of this application;
FIG. 5 is a flowchart of an ID index segment allocation method according to an embodiment of this application;
FIG. 6 is a flowchart of an active resource access method according to an embodiment of this application;
FIG. 7A and FIG. 7B are a flowchart of another active resource access method according to an embodiment of this application;
FIG. 8 is a schematic diagram of a resource display interface according to an embodiment of this application;
FIG. 9 is a schematic diagram of another resource display interface according to an embodiment of this application;
FIG. 10 is a flowchart of another active resource access method according to an embodiment of this application;
FIG. 11 is a schematic diagram of another resource display interface according to an embodiment of this application;
FIG. 12 is a flowchart of a passive resource access method according to an embodiment of this application; and
FIG. 13 is a schematic diagram of a cross-device access scenario according to an embodiment of this application.

### DESCRIPTION OF EMBODIMENTS

A resource access method according to embodiments of this application may be applied to an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a smart home device. A specific type of the electronic device is not limited in embodiments of this application.

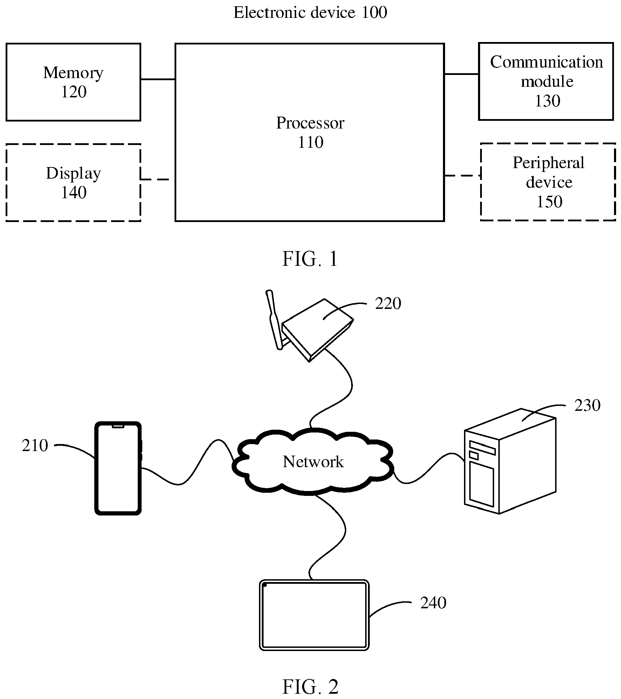

FIG. 1 is a schematic diagram of a structure of an electronic device 100 according to an embodiment of this application. The electronic device 100 may include a processor 110, a memory 120, a communication module 130, and the like.

The processor 110 may include one or more processing units, and the memory 120 is configured to store program code and data. In embodiments of this application, the processor 110 may execute computer-executable instructions stored in the memory 120, to perform the method according to embodiments of this application.

The communication module 130 may be configured to: perform communication between internal modules of the electronic device 100, or perform communication between the electronic device 100 and another external electronic device, or the like. For example, if the electronic device 100 communicates with another electronic device in a wired connection manner, the communication module 130 may include an interface, for example, a USB interface, where the USB interface may be an interface that complies with a USB standard specification, and may be specifically a mini USB interface, a micro USB interface, a USB Type C interface, or the like. The USB interface may be configured to connect to a charger to charge the electronic device 100, or may be configured to perform data transmission between the electronic device 100 and a peripheral device, or may be configured to connect to a headset for playing audio through the headset. The interface may be further configured to connect to another electronic device such as an AR device.

Alternatively, the communication module 130 may include an audio component, a radio frequency circuit, a Bluetooth chip, a wireless fidelity (wireless fidelity, Wi-Fi) chip, a near-field communication (near-field communication, NFC) module, and the like. The communication module 130 may perform interaction between the electronic device 100 and the another electronic device in a plurality of different manners.

Optionally, the electronic device 100 may further include a display 140, and the display 140 may display an image, a video, or the like in a human-computer interaction interface.

Optionally, the electronic device 100 may further include a peripheral device 150, for example, a mouse, a keyboard, a loudspeaker, or a microphone.

It should be understood that, in addition to various components or modules shown in FIG. 1, the structure of the electronic device 100 is not specifically limited in this embodiment of this application. In some other embodiments of this application, the electronic device 100 may further include more or fewer components than those shown in the figure, some components may be combined, some components may be split, or different component arrangements may be used. The components shown in the figure may be implemented by using hardware, software, or a combination of software and hardware.

To facilitate understanding of the technical solutions in embodiments of this application, the following first describes an application scenario of embodiments of this application.

An electronic device may store and access various resources, such as audio, a video, a picture, a file, and a folder. In some embodiments, each resource in the electronic device has a corresponding resource ID. The electronic device may generate a corresponding local content URI based on the resource ID, access the resource based on the local content URI, and perform an operation such as adding, deleting, modifying, querying, and browsing.

A format of the local content URI may be content: //provider (provider) /[path (path)] /[group (group)] /[ID]. The provider may be one of four components in an Android system: a content provider (content provider), where the content provider includes a plurality of child classes such as a file provider (file provider), a media provider (media provider), a document provider (document provider), an external storage provider (external storage provider), and a download provider (download provider). The [path] indicates a location of a resource in a device. The [group] indicates a group in which a resource is located, and the group may be classified based on a resource type. The [ID] indicates a resource ID, and identifies an obtained resource. IDs of a same resource in different devices can be different. The [path], the [group], and the [ID] are optional.

The following illustrates several examples of local content URIs.

Example 1: content://com.android.providers.downloads.documents/document/1324. The [provider] is "com.android.providers.downloads.documents", the [path] is "document", and the [ID] is "1324".

Example 2: content://media/external/downloads/56. The [provider] is "media", the [path] is "external/downloads", and the [ID] is "56".

Example 3: content://media/external/images/media/10. The [provider] is media, the [path] is external, the [group] is images/media, and the [ID] is 10.

However, with continuous development of terminal technologies, to implement device interconnection and resource sharing and enable electronic devices to play a greater role, cross-device access between electronic devices attracts more attention. For example, a same user may have a plurality of electronic devices such as a mobile phone, a tablet computer, and a desktop computer. A photo taken by the user by using the mobile phone is stored in the mobile phone, but the user may also want to access the photo through the tablet computer and the desktop computer. However, in the foregoing embodiment, because a resource ID can identify only a local resource of the electronic device, resource IDs corresponding to different resources in different electronic devices may be the same. In this case, when the electronic device obtains a resource ID, the electronic device cannot determine a resource corresponding to the resource ID. Therefore, actually, the electronic device cannot perform cross-device access based on the local content URI.

To resolve the foregoing technical problem, embodiments of this application provide a distributed system and a resource access method.

Refer to FIG. 2. The distributed system may include a plurality of electronic devices. FIG. 2 shows a device A 210, a device B 220, a device C 230, and a device D 240. The device A 210, the device B 220, the device C 230, and the device D 240 may be connected to each other through a network.

For example, the device A 210 may be a mobile phone, the device B 220 may be a home data center (home data center, HDC) device (such as a router), the device C 230 may be a server, and the device D 240 may be a tablet computer. The HDC device may be used as a storage and processing center of home data, and the home data may include a home file, audio, a video, a picture, and the like. In some embodiments, the HDC device may include a router or a gateway. It may be understood that, in embodiments of this application, only the mobile phone, the router, the server, and the tablet computer are used as examples to describe the distributed system and the cross-device resource access method. However, device types of the device A 210, the device B 220, the device C 230, and the device D 240 are not limited.

In some embodiments, the device B 220, the device C 230, and the device D 240 may separately log in to a same user account as the device A 210; and/or in some embodiments, the device B 220, the device C 230, and the device D 240 may separately access a same local area network as the device A 210.

In some embodiments, the device A 210, the device B 220, the device C 230, and the device D 240 may be connected through a soft bus.

The bus is a common channel used by a plurality of devices to transmit information. The soft bus is a virtual bus that shields protocol differences of various devices through a protocol shelf and a software-hardware collaboration layer. A bus hub module parses commands to discover and connect devices, and implements functions such as file transmission and message transmission between devices through task and data buses, so as to implement automatic device discovery and zero-wait transmission. The soft bus has characteristics such as automatic discovery, ready-to-use, a high bandwidth, a low latency, and high reliability. A plurality of devices in a same scenario can implement distributed services such as device virtualization, cross-device service invoking, multi-screen collaboration, and data sharing through the soft bus.

In FIG. 2, any device in the system may access a resource in another device in a cross-device manner.

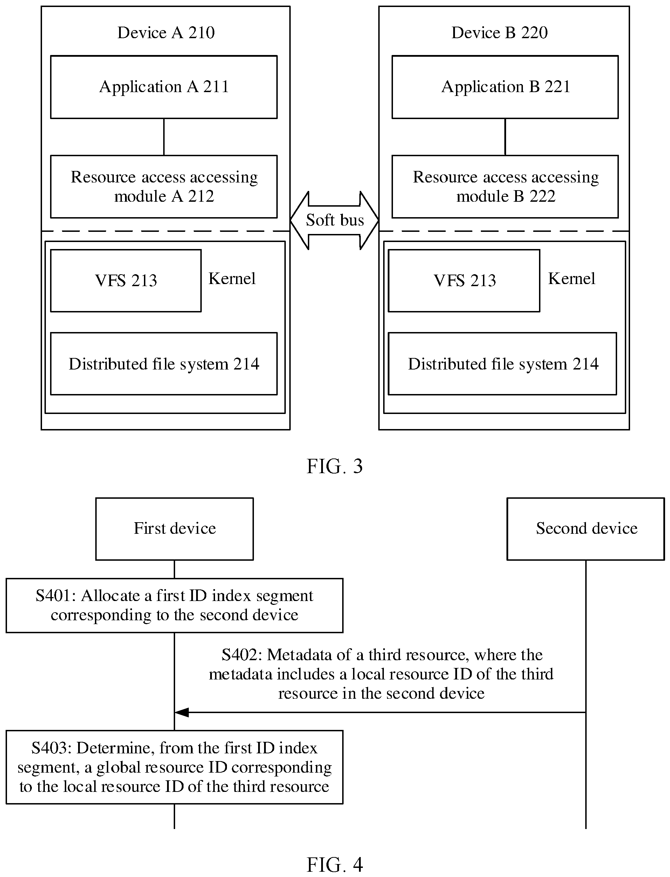

The device A 210 and the device B 220 are used as an example to describe a software structure of the distributed system, as shown in FIG. 3.

The device A 210 includes an application A 211, a resource access module A 212, a VFS (virtual file system, virtual file system) 213, and a distributed file system 214. The VFS 213 and the distributed file system 214 are disposed in a kernel of the device A210.

The application A 211 may be any application in the device A 210.

The resource access module A 212 is configured to provide an entry that accesses a resource for the application A 211, including providing an interface that accesses the resource, and/or providing an application interface that accesses the resource. In some embodiments, the resource access module A 212 may be configured to perform mapping between a local resource ID and a global resource ID, or may be configured to determine whether a resource ID is a local resource ID of the device A 210 or a global resource ID of another device, that is, determine a location of a corresponding resource and select to perform local access or cross-device access.

The VFS 213 may isolate an actual file system in the device A 210 from an operating system, and different applications in the device A 210 may access any type of file system in a same manner.

Similarly, the device B 220 may include an application B 221, a resource access module B 222, a VFS 213, and a distributed file system 214. The application B 221 may be any application in the device B 220, and the resource access module B 222 may be the same as or similar to the resource access module A 212.

The distributed file system 214 may be deployed in the device A 210 and the device B 220. The distributed file systems of the device A 210 and the device B 220 may store different resources, and resources at a local end and a peer end may be accessed by using the distributed file system 214.

The device B 220 may obtain metadata of a resource in the device B 220 by using the resource access module B 222. The metadata includes a local resource ID of the resource in the device B, and may further be sent to the device A 210 through a network connection (for example, a soft bus) between the device B 220 and the device A 210. The device A 210 maps the local resource ID of the device B 220 to a global resource ID different from a local resource ID of any resource in the device A 210 by using the resource access module A 212. For the device A 210, this avoids a problem that different resources of the device A 210 and the device B 220 correspond to a same resource ID. The device A 210 may access a local resource of the device A 210 based on a local resource ID of the device A 210, or may access a resource of the device B 220 based on a global resource ID, to implement cross-device access.

The application A 211 in the device A 210 may not sense a specific location of a resource. For the application A, there is no difference between a local resource ID and a cross-device resource ID. When the application A 211 accesses a resource based on a resource ID, the resource access module A 212 in the device A 210 may determine whether the resource ID is a local resource ID of the device A 210 or a global resource ID of another device. If the resource ID is a local resource ID of the device A 210, the resource access module A 212 accesses the resource from the distributed file system 214 through the VFS 213 in the device A. If the resource ID is a global resource ID of the device B 220, the global resource ID may be mapped to a local resource ID of the device B 220, and then the resource is accessed from the distributed file system 214 of the device B 220 through the network connection (for example, a soft bus) between the device B 220 and the device A 210.

Similarly, the device B 220 may access a resource in the device A 210 in a manner similar to that of the device A 210.

Specific embodiments are used below to describe in detail the technical solutions of this application. The following several specific embodiments may be combined with each other, and a same or similar concept or process may not be described repeatedly in some embodiments.

FIG. 4 is a flowchart of a resource ID mapping method according to an embodiment of this application. The method may be applied to a first device and a second device. The first device and the second device each may be any device in FIG. 2 and FIG. 3. In some embodiments, after discovering that the second device is online (for example, a network connection to the second device is successfully established, or a resource sharing request is received from the second device), the first device may complete mapping of a local resource ID of the second device according to the method shown in FIG. 4, to subsequently access the resource in the second device. In some other embodiments, after a user triggers resource sharing between the first device and the second device (for example, an instruction specified by the user for performing resource sharing with the second device is obtained, or an authorization of the user for performing resource sharing with the second device is obtained), the first device may complete mapping of a local resource ID of the second device according to the method shown in FIG. 4. In some other embodiments, after receiving a local resource ID sent by the second device, the first device may complete mapping of the local resource ID of the second device according to the method shown in FIG. 4. Certainly, during actual application, the first device may alternatively complete mapping of a local resource ID of the second device according to the method shown in FIG. 4 under another trigger condition. The trigger condition is not specifically limited in embodiments of this application. It should be noted that the method is not limited to the specific sequence described in FIG. 4 and the following. It should be understood that in other embodiments, sequences of some steps in the method may be exchanged according to an actual requirement, or some steps in the method may be omitted or deleted. The method includes the following steps.

S401: The first device allocates a first ID index segment corresponding to the second device.

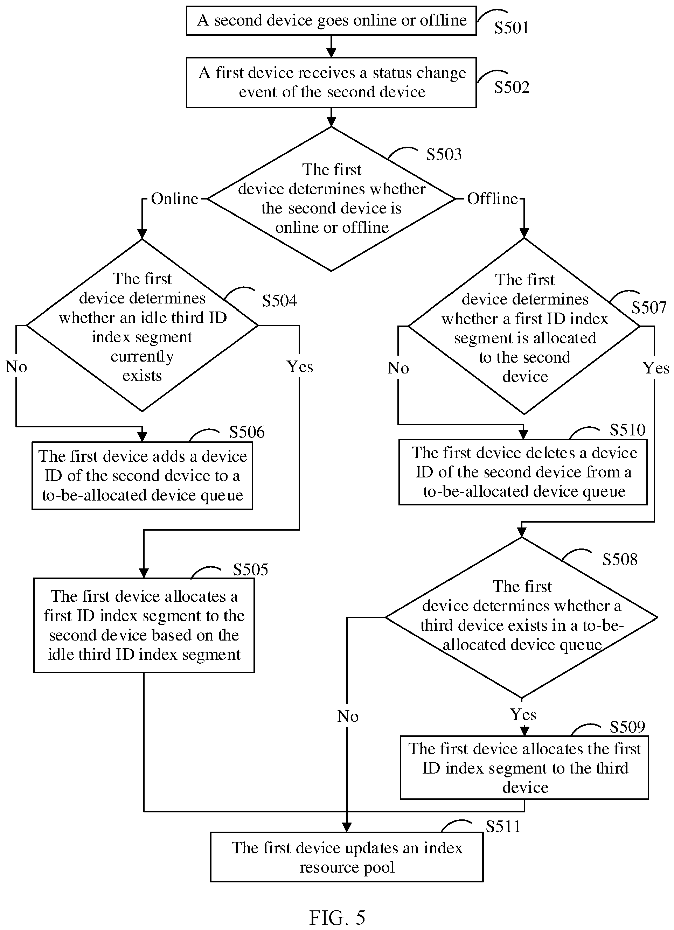

For a manner in which the first device allocates the first ID index segment corresponding to the second device, refer to the method shown in FIG. 5.

The first ID index segment may include a plurality of resource IDs, and the plurality of resource IDs may be consecutive or inconsecutive.

It should be noted that step S401 is an optional step.

S402: The first device obtains metadata of a third resource in the second device, where the metadata includes a local resource ID of the third resource in the second device.

The metadata of the third resource may be information used to describe an attribute of the third resource. The local resource ID of the third resource in the second device may be generated by a third device.

In some embodiments, the metadata of the third resource may further include a content type of the third resource and a path of the third resource in the second device, and may further include a group in the path.

In some embodiments, the metadata of the third resource may further include at least one of a resource name, a resource size, and an opening manner of the third resource.

In some embodiments, the metadata of the third resource may further include at least one of version information and a modification time. The modification time indicates a time at which the third resource is modified, and the version information indicates a version of the third resource.

Certainly, during actual application, the metadata of the third resource may further include other information used to describe the attribute of the third resource.

It should be noted that an occasion and a manner in which the first device obtains the metadata of the third resource from the second device are not specifically limited in embodiments of this application. For example, for the manner of obtaining the metadata of the third resource, the second device may send the metadata of the third resource to the first device after establishing a network connection to the first device, or the second device sends the metadata of the third resource to the second device when receiving a sharing instruction of the third resource from the user.

In addition, in some embodiments, the first device may first obtain the metadata of the third resource in the second device through S402, and then allocate the first ID index segment corresponding to the second device through S401. In other words, the first device allocates the first ID index segment corresponding to the second device only when it is determined that the second device shares a resource with the first device, so that index resources can be reduced.

S403: The first device determines, from the first ID index segment, a global resource ID corresponding to the local resource ID of the third resource.

Because a local resource ID of an electronic device identifies a resource at a local end of the electronic device, a local resource ID of the second device may be duplicate with a local resource ID of the first device. In this case, the first device cannot determine a corresponding resource based on the local resource ID. Therefore, the first device may determine, from the first ID index segment, the global resource ID corresponding to the local resource ID of the third resource, that is, map the local resource ID of the third resource to the global resource ID, to avoid a problem that the local resource ID of the second device is duplicate with the local resource ID of the first device.

In some embodiments, the first device may offset the local resource ID of the third resource based on an offset between the first ID index segment and a second ID index segment of the first device, to obtain the global resource ID of the third resource.

The offset may indicate an offset degree between resource IDs that have a mapping relationship and that are in the first ID index segment and the second ID index segment. For example, if the first ID index segment is 3 *10⁸ to 4 *10⁸, and the second ID index segment is 0 to 1*10⁸, the offset is 3*10⁸-0=3*10⁸. A resource ID, in the first ID index segment, that is obtained after a resource ID in the second ID index segment is offset may be obtained by adding 3 *10⁸ to the resource ID.

It should be noted that a manner in which the first device determines, from the first ID index segment, the global resource ID corresponding to the local resource ID of the third resource is not specifically limited in embodiments of this application. For example, the first device may successively obtain, from the first ID index segment in ascending order of resource IDs, the global resource ID corresponding to the local resource ID of the third resource. Alternatively, the first device may randomly determine, from the first ID index segment, the global resource ID corresponding to the local resource ID of the third resource.

For example, the first device includes a file A, and a local resource ID of the file A in the first device is 10. The second device includes a file B, and a local resource ID of the file B in the second device is also 10. It can be learned that the first device cannot determine whether 10 corresponds to the file A or the file B. If the first ID index segment that corresponds to the second device and that is allocated by the first device is 3*10⁸ to 4 *10⁸, the first device may map the local resource ID of the file B in the second device to 3 *10⁸ to 4 *10⁸, to obtain that the global resource ID of the file B is 3*10⁸+10. In this case, the first device may determine that 10 corresponds to the file A at a local end of the first device, and 3*10⁸+10 is the file B in the second device.

It should be further noted that if S401 is omitted, in S403, the first device may randomly select an unused resource ID that is not in the second ID index segment as the global resource ID corresponding to the local resource ID of the third resource, and add the global resource ID to the first ID index segment. Global resource IDs of a plurality of third resources may form the first ID index segment corresponding to the second device.

In some embodiments, when determining the local resource ID and the global resource ID of the third resource in the second device, the first device may store the local resource ID and the global resource ID in a resource ID correspondence, where the resource ID correspondence may indicate a correspondence between a local resource ID and a global resource ID.

In embodiments of this application, the first device may allocate the first ID index segment corresponding to the second device, and obtain the metadata of the third resource in the second device. The metadata includes the local resource ID of the third resource in the second device. The first device maps the local resource ID of the third resource to the global resource ID, to avoid a problem that the local resource ID of the third resource in the second device is duplicate with a local resource ID of another local resource in the first device, so that the first device can access the third resource in the second device in a cross-device manner. Different ID index segments identify different devices, and this facilitates smooth extension of a URI. A northbound interface does not need to be modified, so that an upper-layer application can perform cross-device access without additional configuration.

FIG. 5 is a flowchart of an ID index segment allocation method according to an embodiment of this application. The method may be applied to a first device, a second device, and a third device. The first device, the second device, and the third device may be any device in FIG. 2 and FIG. 3. It should be noted that the method is not limited to the specific sequence described in FIG. 5 and the following. It should be understood that in other embodiments, sequences of some steps in the method may be exchanged according to an actual requirement, or some steps in the method may be omitted or deleted. The method includes the following steps.

S501: The second device goes online or offline.

In some embodiments, that the second device goes online may mean that the second device establishes a network connection to the first device, and that the second device goes offline may mean that the second device disconnects the network connection to the first device.

For example, when the second device approaches the first device, and establishes a connection to the first device by using a near field communication technology such as Bluetooth or a wireless network Wi-Fi, the second device is online. Alternatively, when the second device or the first device disconnects the connection, the second device is offline.

In some embodiments, that the second device is online may mean that the second device switches a state of the second device to online, and that the second device is offline may mean that the second device switches a state of the second device to offline.

S502: The first device receives a status change event of the second device.

The status change event includes an online event or an offline event.

S503: The first device determines whether the second device is online or offline. If the second device is online, S504 is performed. If the second device is offline, S507 is performed.

If the status change event received by the first device is an online event, the first device determines that the second device is online. If the status change event received by the first device is an offline event, the first device determines that the second device is offline.

S504: The first device determines whether an idle third ID index segment currently exists. If the idle third ID index segment exists, S505 is performed. If the idle third ID index segment does not exist, S506 is performed.

The first device may set an index resource pool, and the index resource pool includes at least one third ID index segment and allocation status information corresponding to each third ID index segment. The allocation status information of the third ID index segment may indicate whether a current state of the third ID index segment is allocated or idle. If the current state is allocated, the allocation status information further indicates a device ID of an electronic device corresponding to the third ID index segment. Therefore, the first device may obtain the allocation status information corresponding to each third ID index segment from the index resource pool, and determine, based on the allocation status information, whether the third ID index segment is idle.

It should be noted that each third ID index segment may include a plurality of resource IDs, and the plurality of resource IDs may be consecutive, or may be inconsecutive. A quantity of resource IDs included in different third ID index segments may be the same or different. Two adjacent third ID index segments may be consecutive or inconsecutive.

For example, the at least one third ID index segment may include 0 to 10⁸, 10⁸ to 2*10⁸, 2*10⁸ to 3*10⁸, 3*10⁸ to 4*10⁸, and 4*10⁸ to 5*10⁸. The five third ID index segments are consecutive, and each third ID index segment includes a same quantity of resource IDs, where the quantity is 10⁸. For another example, the at least one third ID index segment may include 0 to 2*10⁸, 4*10⁸ to 5*10⁸, and 6*10⁸ to 9*10⁸. The three third ID index segments are inconsecutive, and quantities of resource IDs included in each third ID index segment are also different.

In some embodiments, the first device may set at least one third ID index segment based on a device type of the electronic device, that is, each third ID index segment may correspond to one device type, and one device type may correspond to at least one third ID index segment.

The device type indicates a type of the electronic device. A division manner of a device type may be determined by related technical personnel in advance. In some embodiments, device types may be classified into a first device local end, a server, a terminal device, and an HDC device. Correspondingly, ID index segments corresponding to each device type may be shown in Table 1.

**Table 1**

| Device type | ID index segment |
|---|---|
| Local end | 0 to 10⁸ |
| Server | 10⁸ to 2*10⁸ |
| Terminal device | 3*10⁸ to 4*10⁸, 4*10⁸ to 5*10⁸, 5*10⁸ to 6*10⁸, 6*10⁸ to 7*10⁸, 7*10⁸ to 8*10⁸, and 8*10⁸ to 9*10⁸ |
| HDC device | 10⁹ to 11*10⁸ |

It should be noted that, in this embodiment of this application, Table 1 only illustrates a correspondence between a device type and an ID index segment. A division manner of an ID index segment, a correspondence between the ID index segment and a device type, and a range and a size of each ID index segment are not specifically limited in embodiments of this application.

S505: The first device allocates a first ID index segment to the second device based on the idle third ID index segment.

In some embodiments, if the first device does not set the device type corresponding to the third ID index segment, the first device may obtain any idle third ID index segment, and determine the idle third ID index segment as the first ID index segment corresponding to the second device.

In some embodiments, if the first device obtains at least one third ID index segment based on the device type of the electronic device, the first device may obtain, based on the device type of the second device, an idle third ID index segment corresponding to the device type, and determine the idle third ID index segment as the first ID index segment corresponding to the second device.

For example, if the device type of the second device is a terminal device, the first device may determine, from the correspondence between a device type and an ID index segment that is shown in Table 1, that the third ID index segment corresponding to the terminal device includes 3*10⁸ to 4*10⁸, 4*10⁸ to 5*10⁸, 5*10⁸ to 6*10⁸, 6*10⁸ to 7*10⁸, 7*10⁸ to 8*10⁸, and 8*10⁸ to 9*10⁸. Therefore, the first device may obtain any idle third ID index segment from the six third ID index segments, and use the idle third ID index segment as the first ID index segment corresponding to the second device.

S506: The first device adds a device ID of the second device to a to-be-allocated device queue.

The to-be-allocated device queue may include a device ID of at least one electronic device to which an ID index segment is to be allocated.

S507: The first device determines whether a first ID index segment is allocated to the second device. If the first ID index segment is allocated to the second device, S508 is performed. If the first ID index segment is not allocated to the second device, S510 is performed.

The first device may query allocation status information of each third ID index segment. If the allocation status information of any third ID index segment is allocated and includes the device ID of the second device, the third ID index segment allocated to the first ID index segment of the second device.

S508: The first device determines whether a third device exists in the to-be-allocated device queue. If the third device exists, S509 is performed. If the third device does not exist, S511 is performed.

If the second device is currently offline, and the first device allocates the first ID index segment to the second device, the first device may detect whether a to-be-allocated third device exists in the to-be-allocated device queue.

In some embodiments, S508 may be replaced with the following step: The first device determines whether a third device whose device type is the same as that of the second device exists in the to-be-allocated device queue. If the third device exists, S509 is performed. If the third device does not exist, S511 is performed.

S509: The first device allocates the first ID index segment to the third device.

Because the to-be-allocated third device exists currently, no idle third ID index segment may exist in the current index resource pool. Therefore, the first device may allocate the first ID index segment to the third device. Alternatively, in some embodiments, the first device may allocate the first ID index segment to the third device whose device type is the same as that of the second device.

It should be noted that, after the first ID index segment is allocated to the third device, a device ID of the third device may be deleted from the to-be-allocated device queue.

S510: The first device deletes a device ID of the second device from a to-be-allocated device queue.

If the second device is currently offline, and the first device does not allocate the corresponding first ID index segment to the second device, going offline of the second device does not affect an allocation status of the first ID index segment. Therefore, the device ID of the second device may be directly deleted from the to-be-allocated device queue.

S511: The first device updates the index resource pool.

According to the foregoing steps, an allocation status of the third ID index segment in the index resource pool may change. Therefore, the first device may update the index resource pool, to ensure that an allocation status of each third ID index segment is latest, so as to facilitate subsequent allocation and recycling of the third ID index segment.

If the first device performs S511 after performing S505, that is, the first device allocates the idle third ID index segment to the second device, the first device may update the allocation status of the first ID index segment from "idle" to "allocated", and add the device ID of the second device to the allocation status information corresponding to the first ID index segment.

If the first device performs S511 after performing S508, that is, the first device reclaims the first ID index segment that is allocated to the second device, the first device may update the allocation status of the first ID index segment from "allocated" to "idle", and delete the device ID of the second device from the allocation status information corresponding to the first ID index segment.

If the first device performs S511 after performing S509, that is, the first device forwards the first ID index segment allocated to the second device to the third device, the first device may update the device ID of the second device in the allocation status information corresponding to the first ID index segment to the device ID of the third device.

In embodiments of this application, the first device may allocate the corresponding first ID index segment to the second device when the second device is online, or may reclaim the first ID index segment allocated to the second device when the second device is offline, and update the index resource pool in time. In this way, a same ID index segment may be multiplexed to a plurality of devices in different time periods. In this case, when the first device discovers that a new device is online, the first device can allocate a corresponding ID index segment to the device, to perform cross-device access on a resource in the device, so as to increase a cross-device access range.

In addition, a range in which the first device needs to perform cross-device access may be small. For example, in a personal home scenario, a total quantity of devices is small and fixed. A quantity of third ID index segments is greater than or equal to the total quantity of devices. Therefore, an allocated third ID index segment does not need to be reclaimed. When the first device discovers that the second device is offline, S507 to S510 may not be performed. Correspondingly, the first device may allocate the first ID index segment to the second device only when the first device discovers that the second device is online for the first time. If the first device discovers that the second device is online again later, the first device does not need to allocate the ID index segment again. In other words, S507 to S510 are optional steps.

According to the methods described in FIG. 4 and FIG. 5, the first device may map the local resource ID that is of the third resource in the second device and that is in the second device to the global resource ID, to avoid a problem that the local resource ID of the second resource in the second device is duplicate with a local resource ID of another local resource in the first device, so that the first device may perform cross-device access to the resource in the second device. Therefore, in the following embodiment, how the first device performs cross-device access to the resource in the second device is described in detail.

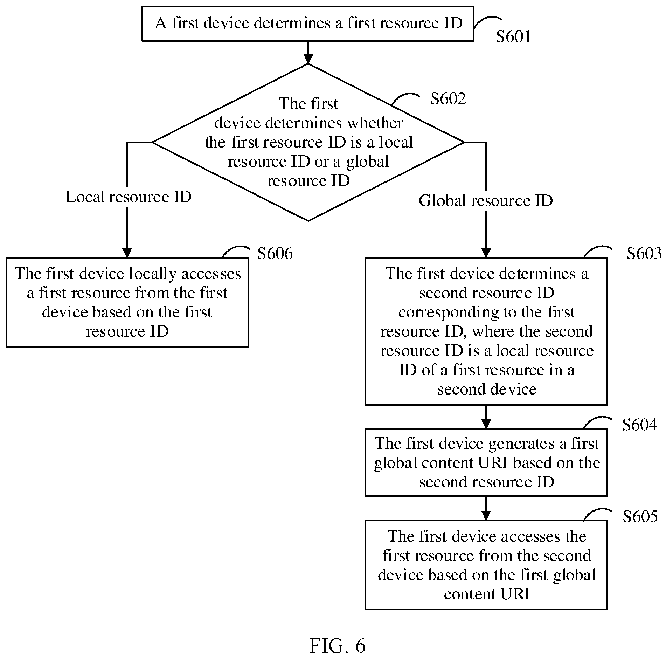

FIG. 6 is a flowchart of an active resource access method according to an embodiment of this application. The method may be applied to a first device and a second device. The first device and the second device each may be any device in FIG. 2 and FIG. 3. Active access may be understood as that the first device determines a to-be-accessed first resource through user selection or in another manner, and actively accesses the first resource in a cross-device manner from another device. It should be further noted that the method is not limited to the specific sequence described in FIG. 6 and the following. It should be understood that in other embodiments, sequences of some steps in the method may be exchanged according to an actual requirement, or some steps in the method may be omitted or deleted. The method includes the following steps.

S601: The first device determines a first resource ID.

The first resource ID may be a resource ID of an accessed first resource specified by a user. Certainly, during actual application, the first device may determine the first resource in another manner. A manner of determining the first resource is not limited in embodiments of this application.

In some embodiments, the first device may further determine an operation instruction that accesses the first resource, and the operation instruction may include deleting, modifying, or viewing.

S602: The first device determines whether the first resource ID is a local resource ID or a global resource ID. If the first resource ID is the local resource ID, S606 is performed. If the first resource ID is the global resource ID, S603 is performed.

Because the first resource may be locally located in the first device, or may be in another device, to determine a specific device on which the accessed first resource is located, the first device may determine whether the first resource ID is the local resource ID or the global resource ID. If the first resource ID is the local resource ID, the first resource is locally located in the first device. If the first resource ID is the global resource ID, the first resource is in another device other than the first device.

If the first resource ID belongs to a first ID index segment corresponding to the second device, the first resource ID is a global resource ID, and the first resource is located in the second device. If the first resource ID belongs to a second ID index segment corresponding to the first device, the first resource ID is a local resource ID, and the first resource is locally located in the first device.

In some embodiments, the first device may obtain a device ID corresponding to the first resource ID. If the device ID is a device ID of the first device, the first device determines that the resource ID is the local resource ID. If the device ID is a device ID of the second device other than the first device, the first device determines that the resource ID is the global resource ID.

S603: The first device determines a second resource ID corresponding to the first resource ID, where the second resource ID is a local resource ID of the first resource in the second device.

Because the first resource ID is the global resource ID, the first resource is a resource in the second device, and the first resource ID is obtained by mapping the second resource ID (that is, the local resource ID) of the first resource in the second device, the first device may map the first resource ID back to the second resource ID.

In some embodiments, the first device may obtain, from a stored resource ID correspondence, the second resource ID corresponding to the first resource ID.

In some embodiments, the first device offsets the second resource ID to obtain the first resource ID. In S603, the first device may reversely offset the first resource ID based on an offset between the first ID index segment and the second ID index segment, to obtain the second resource ID.

S604: The first device generates a first global content URI based on the second resource ID.

Data format of the global content URI may be:
content://[access account]:[target account]@[encrypted receiving device ID]?[modification time]#[version information magic number]/[provider]/[path]/[group]/[local resource ID].

The access account indicates a user identity that accesses a resource. The target account indicates a user identity to which the resource belongs. The access account and the target account can be an account that is currently logged in or an account that is not currently logged in. The encrypted device ID may be used by a device receiving a global content URI to verify the device in which the resource is located and a device receiving the global content URI. The encrypted device ID may be obtained by encrypting a device ID of a receiving device (that is, the device receiving the first global content URI) based on a device ID of a target device. The target device and the receiving device may be a same device. The encrypted device ID can prevent an application from sensing and collecting the device ID, reduce a problem of user privacy leakage, and improve security of an access process. The version information magic number may indicate version information of a first resource. Because the device ID of the target device is used as an encrypted key, key agreement does not need to be performed, and a problem of key fixing is avoided. The modification time prevents access to a resource whose modification time is incorrect and ensures consistency of accessed resource content. The version information magic number prevents access to a resource of an incorrect version and ensures consistency of an accessed resource version.

It should be noted that the [access account], the [target account], the [encrypted receiving device ID], the [modification time], the [version information magic number], and the [group] are optional.

In some embodiments, the first device may generate the first global content URI based on the second resource ID and a content type and a path that are included in metadata of the first resource. In some other embodiments, the first device may further obtain at least one piece of information of a first access account, a first target account, a first encrypted device ID, a first modification time, first version information, and a group, and add the at least one piece of information to the first global content URI.

The first access account may be an account corresponding to the first device, or may be an account obtained by the first device from another device. The first target account may be an account corresponding to a target device (that is, the second device) in which the first resource is located, and the first target account may be obtained by the first device from another device (for example, the second device). The first modification time, the first version information, and the group may be obtained from the metadata of the first resource.

S605: The first device accesses the first resource from the second device based on the first global content URI.

The first device may send a first access request to the second device, where the first access request carries the first global content URI and an operation instruction. The second device locates the first resource based on the content type, the path, and the second resource ID that are carried in the first global content URI, performs an operation on the first resource based on the operation instruction, and feeds back an operation result to the first device.

In some embodiments, if the first global content URI includes the first access account, the second device may verify the first access account. If the first access account has a permission to access the second device, it is determined that the verification succeeds, so that the second device responds to the first access request. If the first access account does not have the permission to access the second device, it is determined that the verification fails, so that the second device does not respond to the first access request.

In some embodiments, if the first global content URI includes the first target account, the second device may verify the first target account. If it is determined that the first target account corresponds to the second device, it is determined that the verification succeeds, so that the second device responds to the first access request. If it is determined that the first target account does not correspond to the second device, it is determined that the verification fails, so that the second device does not respond to the first access request.

In some embodiments, if the first global content URI includes the first access account and the first target account, the second device may verify the first access account and the first target account. If it is determined that the first target account corresponds to the second device, and the first access account has a permission to access the first target account, it is determined that the verification succeeds, so that the second device responds to the first access request. If it is determined that the first target account does not correspond to the second device, and the first access account does not have the permission to access the first target account, it is determined that the verification fails, so that the second device does not respond to the first access request.

In some embodiments, if the first global content URI includes the first encrypted device ID, the second device may decrypt the first encrypted device ID based on the device ID of the second device. If the decryption succeeds and the device ID of the second device is obtained through the decryption, the second device determines that the first resource is a resource in the second device, so that the second device responds to the first access request. Otherwise, the second device does not respond to the first access request.

It should be noted that, if the first global content URI includes the first access account, the first target account, and the first encrypted device ID, the second device may respond to the first access request after the first access account and the first target account are successfully verified, and the first encrypted device ID is successfully decrypted to obtain the device ID of the second device.

In some embodiments, if the first global content URI includes at least one of the first modification time and the first version information, the second device may obtain the first resource based on at least one of the first modification time and a version indicated by the first version information.

S606: The first device locally accesses the first resource from the first device based on the first resource ID.

The first device may generate a first local content URI based on the first resource ID, and locally access the first resource from the first device based on the first local content URI.

In some embodiments, the first device may generate the first local content URI based on the first resource ID and the content type and the path included in the metadata of the first resource, locate the first resource based on the content type, the path, and the first resource ID in the first local content URI, and perform an operation on the first resource based on an operation instruction for the first resource, to obtain an operation result.

In this embodiment of this application, the first device may determine the first resource ID of the first resource, and determine, based on the first ID index segment to which the first resource ID belongs, whether the first resource ID is a local resource ID or a global resource ID. If the first resource ID is the global resource ID, the first device may determine the second resource ID corresponding to the first resource ID, where the second resource ID is the local resource ID of the first resource in the second device, generate the first global content URI based on the second resource ID, and access the first resource from the second device based on the first global content URI, to implement device interconnection and resource sharing.

For example, refer to FIG. 2 again. When a user of the device A 210 opens an image editing application, the image editing application is started and requests to open a picture A edited last time. An ID of the picture A is 10010. The device A 210 matches the ID 10010 of the picture A with ID index segments corresponding to a plurality of devices. If an ID index segment corresponding to a local electronic device (including the device A 210 and the device B 220) is 0 to 10000, and an ID index segment corresponding to the device A210 to the device B 220 is 10000 to 20000, the device A 210 may determine that the ID 10010 of the picture A is between 10000 and 20000. Therefore, the device A 210 may determine that the picture A is a global resource of the device B 220, and 10010 is a global resource ID of the picture A. The device A 210 may map the 10010 to a value ranging from 0 to 10000, to obtain that a local resource ID of the picture A in the device B 220 is 10, and then obtain the picture A from the device B 220 based on the local resource ID 10. Alternatively, the device A 210 obtains a picture B from the image editing application, where an ID of the picture B is 10. The device A may determine that the ID 10 is between 0 and 10000, that is, the picture B is a local resource of the device A 210. Therefore, the device A may locally obtain the picture B from the device A 210 based on the ID 10. It can be learned that even if resources with a same local resource ID exist in the device A 210 and the device B 220, the device A 210 can accurately access the two resources. However, if the device A 210 does not actively access a resource according to the method in embodiments of this application, it is possible that when the picture A in the device B 220 is actually needed, the picture B in the device A 210 is accessed, or when the picture B in the device A 210 is actually needed, the picture A in the device B 220 is accessed.

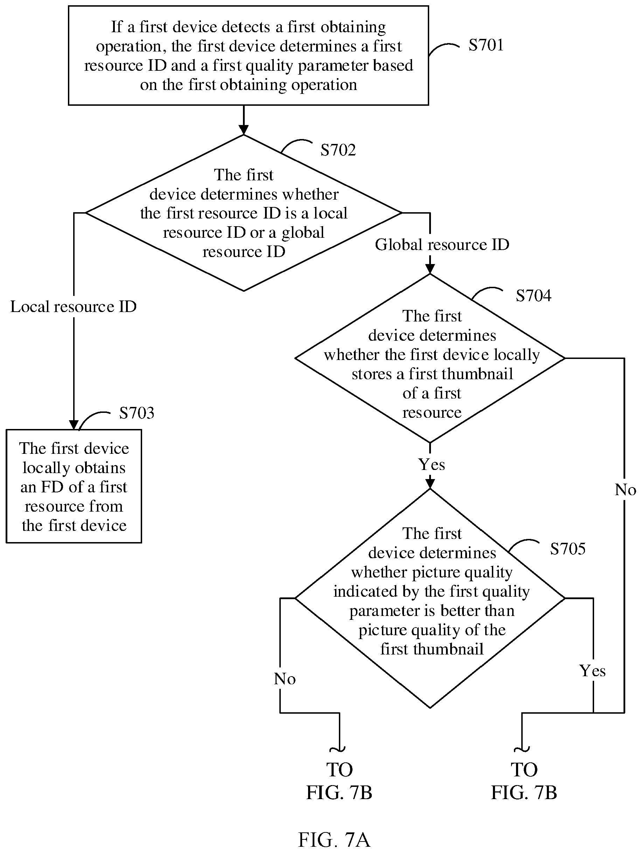

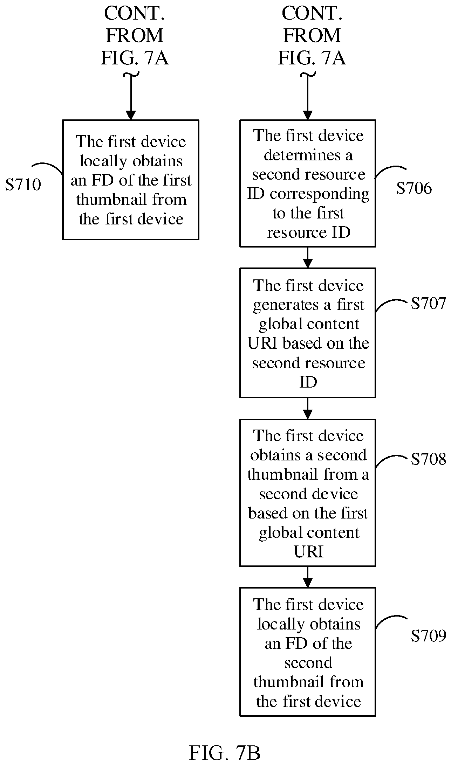

FIG. 7A and FIG. 7B are a flowchart of an active resource access method according to an embodiment of this application. A first device and a second device may be any device in FIG. 2 or FIG. 3. It should be noted that, in the embodiment shown in FIG. 7A and FIG. 7B, a first resource may be a multimedia resource, including audio, a video, or a picture. It should be further noted that the method is not limited to the specific sequence described in FIG. 7A and FIG. 7B and the following. It should be understood that in other embodiments, sequences of some steps in the method may be exchanged according to an actual requirement, or some steps in the method may be omitted or deleted. The method includes the following steps.

S701: The first device detects a first obtaining operation, and determines a first resource ID and a first quality parameter based on the first obtaining operation.

The first obtaining operation is used to obtain a thumbnail of the first resource, and a first access operation may carry the first quality parameter. The first quality parameter may indicate quality of a to-be-obtained thumbnail. In some embodiments, the first quality parameter may include at least one of a first picture resolution or a first picture size. The picture resolution refers to a quantity of pixels in a unit area of a picture, that is, a pixel density. The picture size is pixel values included in a length and a width of a picture, and may be expressed as M pixels * N pixels. Certainly, during actual application, the first quality parameter may include more or fewer types of parameters that indicate picture quality. A type of the first quality parameter is not specifically limited in embodiments of this application.

In some embodiments, the first obtaining operation may not specify a specific first resource, but carry a resource filtering condition. The first device may determine the first resource based on the resource filtering condition. In some embodiments, the first obtaining operation may specify a specific first resource. For example, the first device opens a specific picture.

For example, when an album application is opened, the first obtaining operation may be triggered, and the first device may use all pictures and videos as the first resource. Alternatively, if a user taps a picture option in an album, a resource type carried in the first obtaining operation may be a picture, and the first device may determine resources of all picture types as the first resource. Alternatively, if the user taps a picture in the album, an ID of the picture may be carried in the first obtaining operation, and the first device may determine the picture as the first resource.

S702: The first device determines whether the first resource ID is a local resource ID or a global resource ID. If the first resource ID is the local resource ID, S703 is performed. If the first resource ID is the global resource ID, S704 is performed.

For a manner in which the first device determines whether the first resource ID is the local resource ID or the global resource ID, refer to the related description in S602. Details are not described herein again.

S703: The first device locally obtains an FD of the first resource from the first device.

Because the first resource ID is the local resource ID, the first resource is locally stored in the first device. Therefore, the first device may locally obtain the FD of the first resource from the first device.

The FD is a basis for the first device to perform an operation on the resource, and may be generated by the first device after the resource is opened.

S704: The first device determines whether the first device locally stores a first thumbnail of a first resource. If the first device locally stores the first thumbnail of the first resource, S705 is performed. If the first device does not locally store the first thumbnail of the first resource, S706 is performed.

Because the first resource is the global resource stored in the second device, the first device may first check whether the first thumbnail of the first resource is locally cached in the first device.

The first thumbnail may be obtained by the first device from the second device in advance.

S705: The first device determines whether picture quality indicated by the first quality parameter is better than picture quality of the first thumbnail. If the picture quality indicated by the first quality parameter is better than the picture quality of the first thumbnail, S706 is performed. If the picture quality indicated by the first quality parameter is not better than the picture quality of the first thumbnail, S710 is performed.

When the first device locally stores the first thumbnail, the first device may compare the first quality parameter with a second quality parameter of the first thumbnail. If the picture quality indicated by the first quality parameter is better than or equal to picture quality indicated by the second quality parameter, the quality of the first thumbnail can meet a quality requirement of the thumbnail that needs to be obtained in the first obtaining operation. If the picture quality indicated by the first quality parameter is worse than the picture quality indicated by the second quality parameter, the quality of the first thumbnail cannot meet the quality requirement of the thumbnail that needs to be obtained in the first obtaining operation.

In some embodiments, the second quality parameter may include a second picture resolution, and then the second picture resolution may be compared with the first picture resolution. If the first picture resolution is greater than the second picture resolution, the first device may determine that the picture quality indicated by the first quality parameter is better than the picture quality of the first thumbnail. If the first picture resolution is less than or equal to the second picture resolution, the first device may determine that the picture quality of the first thumbnail is better than or equal to the picture quality indicated by the first quality parameter.

In some embodiments, the second quality parameter may include a second picture size, and then the second picture size may be compared with the first picture size. If the first picture size is greater than the second picture size, the first device may determine that the picture quality indicated by the first quality parameter is better than the picture quality of the first thumbnail. If the first picture size is less than or equal to the second picture size, the first device may determine that the picture quality of the first thumbnail is better than or equal to the picture quality indicated by the first quality parameter.

S706: The first device determines a second resource ID corresponding to the first resource ID, where the second resource ID is a local resource ID of the first resource in the second device.

If the first device does not locally store the first thumbnail, or if the first device locally stores the first thumbnail but the first thumbnail does not meet a quality requirement of the thumbnail that needs to be obtained in the first obtaining operation, the first device may obtain a second thumbnail from the second device.

It should be noted that for a manner in which the first device determines the second resource ID corresponding to the first resource ID, refer to the related description in S603. Details are not described herein again.

S707: The first device generates a first global content URI based on the second resource ID.

It should be noted that for a manner in which the first device generates the first global content URI based on the second resource ID, refer to the related description in S604. Details are not described herein again.

S708: The first device obtains the second thumbnail from the second device based on the first global content URI.

Picture quality of the second thumbnail may be better than or equal to the picture quality indicated by the first quality parameter.

In some embodiments, the picture quality of the second thumbnail may be better than the picture quality of the first thumbnail, and the second thumbnail may be referred to as a high-definition thumbnail.

It should be noted that a manner in which the first device obtains the second thumbnail from the second device based on the first global content URI may be similar to a manner in which the first device accesses the first resource from the second device based on the first global content URI in S605. Details are not described herein again.

In some embodiments, the first device may obtain the first thumbnail and/or the second thumbnail from the second device in advance when determining that the first device does not locally store the first thumbnail and/or the second thumbnail.

S709: The first device locally obtains an FD of the second thumbnail from the first device.

S710: The first device locally obtains an FD of the first thumbnail from the first device.

In some embodiments, if the first device cannot determine the first quality parameter based on the first obtaining operation, the first device may locally obtain the FD of the first thumbnail from the first device.

In embodiments of this application, if obtaining the first obtaining operation, the first device may determine the first resource ID and the first quality parameter based on the first obtaining operation. The first device may further determine whether the first resource ID is a local resource ID or a global resource ID. If the first resource ID is the global resource ID, that is, the first resource is a global resource, the first device may determine, based on the first quality parameter, whether the locally stored first thumbnail meets the quality requirement of the thumbnail that needs to be obtained in the first obtaining operation. If the locally stored first thumbnail meets the quality requirement of the thumbnail that needs to be obtained in the first obtaining operation, the first device may locally access the first thumbnail. Alternatively, if the locally stored first thumbnail does not meet the quality requirement of the thumbnail that needs to be obtained in the first obtaining operation or the first device does not locally store the first thumbnail, the first device may access the second thumbnail from the second device through cross-device access. That is, cross-device access can be reduced through thumbnail proxy, and access efficiency and user experience can be improved.

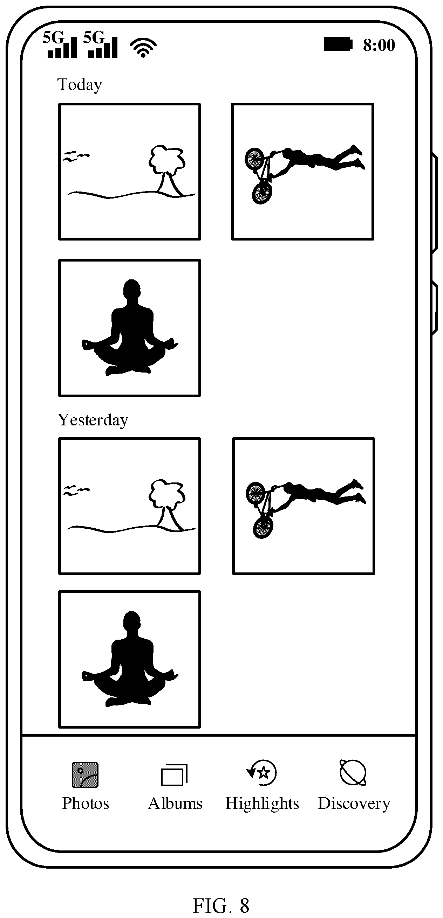

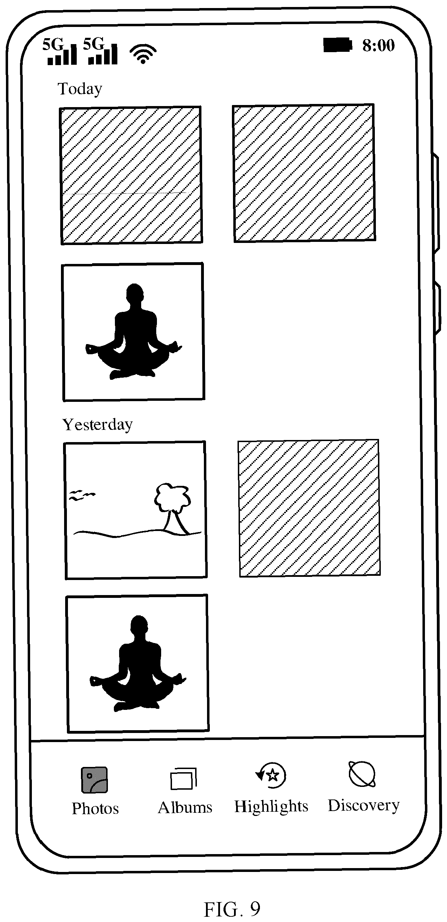

For example, refer to FIG. 2 again. When the user of the device A 210 taps an album icon in the device A 210, the first obtaining operation is triggered. The first device obtains resource IDs of all pictures and videos in a distributed system (including the device A 210, the device B 220, the device C 230, and the device D 240). If the resource ID is a local resource ID, the first device may locally obtain the picture or the video from the device A 210. If the resource ID is a global resource ID (for example, the global resource ID corresponding to the device B 220) corresponding to the device B 220 (that is, the second device), the device A 210 may locally obtain the thumbnail of the picture or the video. If the device A 210 does not locally store the thumbnail, or the stored thumbnail does not meet the quality requirement of the thumbnail that needs to be obtained in the first obtaining operation, the device A 210 may obtain the thumbnail from another device (such as the device B 220) through cross-device access. Then, the device A 210 may display thumbnails of the obtained local picture and video and the picture and video of another device (such as the device B 220) to the user, as shown in FIG. 8. However, when the device A 210 cannot obtain the thumbnail through thumbnail proxy, the picture and the video located on another device (such as the device B 220) may not be displayed, as shown in FIG. 9. It can be learned from comparison with FIG. 8 and FIG. 9 that, according to the active access method provided in embodiments of this application, a communication application can locally display the picture and video in the device A210 and in another device without perceiving a specific location of a resource, so that cross-device access is implemented. In addition, the thumbnail proxy can be used to reduce cross-device access times, and improve access efficiency and user experience.

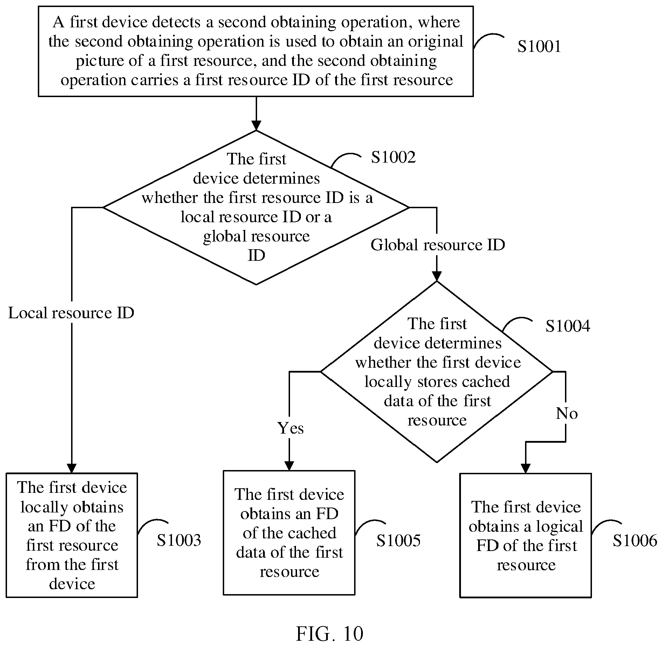

In addition, in some embodiments, the device A 210 may further display a thumbnail of a picture or a video in full screen when detecting that the user taps the thumbnail of the picture or the video. When it is detected that the user taps a thumbnail of a picture or a video and selects an original picture option, an original picture of the picture or the original video of the video is actively accessed according to a method that is the same as or similar to that shown in FIG. 10. Alternatively, in some other embodiments, when detecting that the user taps a thumbnail of a picture or a video, the device A 210 may actively access an original picture of the picture or an original video of the video according to the method shown in FIG. 10.

FIG. 10 is a flowchart of an active resource access method according to an embodiment of this application. A first device and a second device may be any device in FIG. 2 or FIG. 3. It should be noted that, in the embodiment shown in FIG. 10, a first resource may be a multimedia resource, including audio, a video, or a picture. It should be noted that the method is not limited to the specific sequence described in FIG. 10 and the following. It should be understood that in other embodiments, sequences of some steps in the method may be exchanged according to an actual requirement, or some steps in the method may be omitted or deleted. The method includes the following steps.

S1001: The first device detects a second obtaining operation, where the second obtaining operation is used to obtain an original picture of the first resource, and the second obtaining operation carries a first resource ID of the first resource.

S1002: The first device determines whether the first resource ID is a local resource ID or a global resource ID. If the first resource ID is the local resource ID, S1003 is performed. If the first resource ID is the global resource ID, S1004 is performed.

S1003: The first device locally obtains an FD of the first resource from the first device.

S1004: The first device determines whether the first device locally stores cached data of the first resource. If the first device locally stores the cached data of the first resource, S1005 is performed. If the first device does not locally store the cached data of the first resource, S1006 is performed.

S1005: The first device obtains an FD of the cached data of the first resource.

S1006: The first device obtains a logical FD of the first resource.

In some embodiments, the first device may determine a second resource ID corresponding to the first resource ID, where the second resource ID is a local resource ID of the first resource in the second device, generate a first global content URI based on the second resource ID, and obtain the cached data of the first resource from the second device based on the first global content URI.

In some embodiments, when obtaining the cached data of the first resource from the second device, the first device may display download prompt information to a user. The download prompt information may be used to prompt the user that a download process is currently in progress, or may be used to prompt the user of a download progress. The download process is displayed in real time to reduce frame freezing.

In embodiments of this application, if obtaining the second obtaining operation, the first device may determine whether the first resource ID is a local resource ID or a global resource ID. If the first resource ID is the global resource ID, that is, the first resource is a global resource, the first device may locally access the cached data of the first resource. When the first device does not store the cached data of the first resource, the first device may access the first resource from the second device through cross-device access, to implement device interconnection and data sharing.

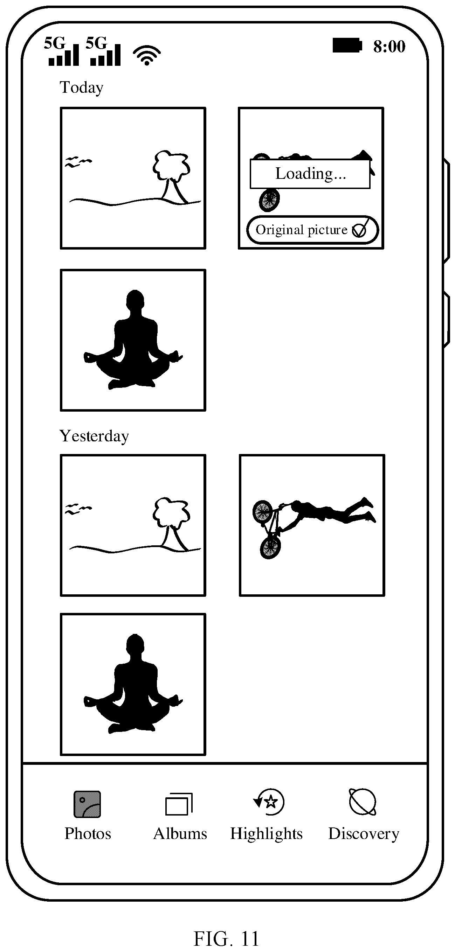

For example, in an application interface shown in FIG. 8, if the user of the device A 210 taps a picture located in an upper right corner of a screen, and taps an original picture option, the device A may detect the second obtaining operation. The device A 210 determines that a resource ID of the picture is a global resource ID corresponding to the device B 220, and the device A 210 locally stores no cached data of the picture. Therefore, the device A 210 obtains the cached data of the picture from the device B 220 through cross-device access, and prompts a download process to the user, as shown in FIG. 11. In FIG. 11, prompt information such as "loading..." is displayed at a central position of the picture. When downloading is completed, a current display interface may be refreshed to display the original picture of the picture, that is, the picture is enlarged to display the original picture.

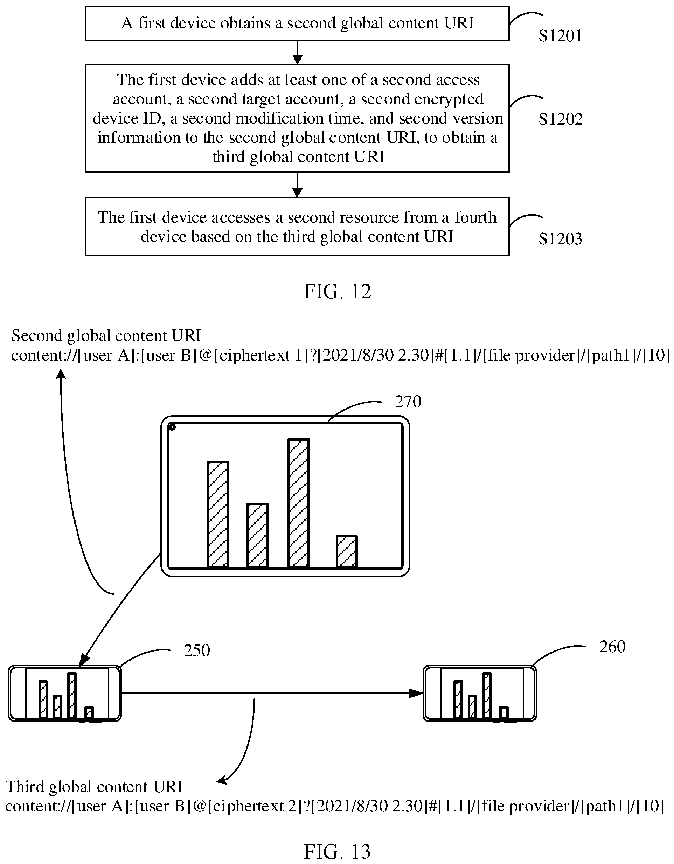

FIG. 12 is a flowchart of a passive resource access method according to an embodiment of this application. A first device, a fourth device, a fifth device, a sixth device, and a seventh device may be any device in FIG. 2 and FIG. 3. Passive access may be understood as that the first device accesses a to-be-accessed resource from another device based on a global content URI shared by the another device. It should be noted that the method is not limited to the specific sequence described in FIG. 12 and the following. It should be understood that in other embodiments, sequences of some steps in the method may be exchanged according to an actual requirement, or some steps in the method may be omitted or deleted. The method includes the following steps.

S1201: The first device obtains a second global content URI.

The second global content URI may include a provider, a path, a group, and a local resource ID corresponding to the to-be-accessed resource. In some embodiments, the second global content URI may further include at least one of a third access account, a third target account, a third encrypted device ID, a third modification time, and third version information.

The third encrypted device ID may be obtained by encrypting, by a device that provides the second global content URI for the first device, a device ID of the first device based on a device ID of the fourth device in which the to-be-accessed resource is located.

It should be noted that the third modification time and the third version information may be determined by the fourth device, and the third access account, the third target account, and the third encrypted device ID may be determined by the fourth device, or may be determined by the device that is other than the fourth device and that provides the second global content URI for the first device.

In some embodiments, the first device may receive the second global content URI sent by the sixth device. For example, the first device may approach the sixth device, and establish a connection to the sixth device based on a near field communication technology such as Bluetooth. The sixth device sends the second global content URI to the first device based on the connection.

In some embodiments, the sixth device and the fourth device may be a same device.

In some embodiments, the first device may receive the second global content URI submitted by a user. For example, the first device may obtain the second global content URI from a QR code submitted by the user, or the first device may receive the second global content URI entered by the user.

Certainly, during actual application, the first device may obtain the second global content URI in another manner. A manner of obtaining the second global content URI by the first device is not specifically limited in embodiments of this application.

S1202: The first device adds at least one of a second access account, a second target account, a second encrypted device ID, a second modification time, and second version information to the second global content URI, to obtain a third global content URI.

In some embodiments, if the second global content URI includes the third encrypted device ID, the first device decrypts the third encrypted device ID based on device IDs of a plurality of online fifth devices.

The plurality of fifth devices may or may not include the fourth device, and the plurality of fifth devices may include the first device. The first device may separately use a device ID of each fifth device as a decryption key to decrypt the second encrypted device ID. If the decryption succeeds, the fifth device is the fourth device in which the to-be-accessed resource is located. If a receiving device ID obtained through decryption is the device ID of the first device, the first device may determine that the second global content URI is shared with the first device. However, if the decryption fails, the first device cannot determine a device in which the to-be-accessed resource is located, and may stop performing subsequent steps. Alternatively, if the decryption succeeds, but the receiving device ID obtained through decryption is not the device ID of the first device, the first device may determine that the second global content URI is not sent to the first device, or may stop performing subsequent steps. It can be learned that the third encrypted device ID is obtained by encrypting a device ID of a device (that is, the first device) receiving the second global content URI based on a device ID of a device (that is, the fourth device) in which the to-be-accessed resource is located. Therefore, in one aspect, the encrypted receiving device ID can prevent an upper-layer application from perceiving the device ID, and avoid user privacy leakage. On the other hand, the device ID of the device in which the to-be-accessed resource is located is used as an encryption key, and key agreement does not need to be performed, to avoid a problem of key fixing.

In some embodiments, because the first device successfully decrypts the third encrypted device ID based on the device ID of the fourth device, the first device may determine that the to-be-accessed resource is located in the fourth device. In addition, because the device ID of the first device is obtained through decryption, the first device may determine that the second global content URI is shared with the first device. Therefore, if the first device successfully decrypts the second encrypted device ID based on the device ID of the fourth device, and obtains the device ID of the first device through decryption, the first device may encrypt the device ID of the fourth device based on the device ID of the fourth device, to obtain the second encrypted device ID, so that verification is subsequently performed based on the location of the to-be-accessed resource of the fourth device and the device receiving the second global content URI.

In addition, in some embodiments, if the second global content URI does not include the third encrypted device ID, the first device may determine, in another manner, that cross-device resource access is performed from the fourth device, to encrypt the device ID of the fourth device based on the device ID of the fourth device, so as to obtain the second encrypted device ID. For example, if the first device receives the second global content URI sent by the sixth device, the sixth device may notify the first device of the device ID of the fourth device. For another example, if the first device obtains the second global content URI from the QR code submitted by the user, the QR code may also include the device ID of the fourth device. Correspondingly, the first device may obtain the device ID of the fourth device from the QR code.

In some embodiments, if the second global content URI includes the third encrypted device ID, the operation of adding, by the first device, the second encrypted device ID to the second global content URI may include updating, by the first device, the third encryption device ID to the second encryption device ID.

In some embodiments, if the second global content URI does not include the third access account, the first device adds the second access account to the second global content URI. If the second global content URI includes the third access account, the first device may update the third access account in the second global content URI to the second access account. In some other embodiments, if the second global content URI includes the third access account, the first device may not update the third access account, and the third global content URI still includes the third access account. Alternatively, it may also be understood that the second access account included in the third global content URI is the same as the third access account.

In some embodiments, if the second global content URI does not include the third target account, the first device adds the second target account to the second global content URI. If the second global content URI includes the third target account, the first device may replace the third target account in the second global content URI with the second target account. In some other embodiments, if the second global content URI includes the third target account, the first device may not update the third target account, and the third global content URI still includes the third target account. Alternatively, it may be understood that the second target account included in the third global content URI is the same as the third target account.

It should be noted that a manner of obtaining the third access account or the third target account by the first device is not specifically limited in embodiments of this application. For example, the third access account may be an account that is currently logged in the first device or an account that is not currently logged in the first device, and the third target account may be sent by the fourth device to the first device in advance.

In some embodiments, if the second global content URI does not include the third modification time, the first device may add the second modification time to the second global content URI. If the second global content URI includes the third modification time, the first device does not update the third modification time, and the third global content URI still includes the third modification time. Alternatively, it may be understood that the second modification time included in the third global content URI is the same as the third modification time.

In some embodiments, if the second global content URI does not include the third version information, the first device may add the second version information to the second global content URI. If the second global content URI includes the third version information, the first device does not update the third version information, and the third global content URI still includes the third version information. Alternatively, it may be understood that the second version information included in the third global content URI is the same as the third version information.

S1203: The first device accesses a second resource from the fourth device based on the third global content URI.

The first device may send a second access request to the fourth device. The second access request may carry the third global content URI, and may further carry an operation instruction that accesses the second resource. The fourth device may respond, based on the third global content URI, to the access of the first device to the second resource.

In some embodiments, if the second global content URI includes the second encrypted device ID, the fourth device may decrypt the second encrypted device ID based on device IDs of a plurality of online seventh devices, where the plurality of seventh devices may include the fourth device. If the decryption based on the device ID of the fourth device succeeds and the device ID of the fourth device is obtained through the decryption, the fourth device determines that the second resource is a resource in the fourth device, and responds to the access of the first device. Otherwise, the fourth device may not respond to the access of the first device.

In some embodiments, if the second global content URI includes any one of the second access account and the third access account, and/or any one of the second target account and the third target account, the fifth device may further verify either of the second access account and the third access account, and/or either of the second target account and the third target account in a manner in which the first device verifies a first access account and a first target account. If the verification succeeds, the fifth device responds to the access of the first device. Otherwise, the fifth device does not respond to the access of the first device.

In some embodiments, the fourth device may obtain the second resource based on at least one of the second modification time and the second version information.

In this embodiment of this application, when obtaining the second global content URI, the first device may add at least one of the second access account, the second target account, the second encrypted device ID, the second modification time, and the second version information to the second global content URI, to obtain the third global URI, and then access the second resource from the fourth device based on the third global content URI. Because the third global content URI may include the third encrypted device ID, the fourth device may verify a device that shares the resource and a device that receives the third global content URI, so that cross-device access security can be ensured, and key agreement does not need to be performed, to avoid a problem of key fixing. Because the third global content URI may include the second access account and the second target account, it is convenient for the fourth device to perform authentication on a user identity that accesses and a user identity that is accessed, so that cross-device access security is improved. Because the third global content URI may include the second modification time and the second version information, consistency of resource content and resource versions in cross-device access is ensured.

For example, as shown in FIG. 13, the first device is a mobile phone E 250, the fifth device is a mobile phone F 260, and the sixth device is a smart large screen 270. The mobile phone F 260 and the smart large screen 270 are located in a same local area network. The mobile phone F 260 projects a screen onto the smart large screen 270, and synchronously displays a file C in the mobile phone F 260. Then, the mobile phone E 250 establishes a connection to the smart large screen 270, and the smart large screen 270 sends a second global content URI to the mobile phone E, where the second global content URI is content://[userA]:[user B]@[ciphertext 1]?[2021/8/30 2.30]#[1.1]/[file provider]/[path1]/[10]. A user A is an access account provided by the smart large screen 270 for the mobile phone E 250, and the user A may be an account that is currently logged in on the smart large screen 270. A user B is an account to which the file C on the mobile phone F 260 belongs. The ciphertext 1 is data obtained by encrypting a device ID of the mobile phone E 250 based on a device ID of the mobile phone F 260. The 2021/8/30 2.30 is a modification time. The 1.1 is version information. The 10010 is a local resource ID of file C in the mobile phone F 260.

After receiving the second global content URI, the mobile phone E 250 can successfully decrypt the ciphertext 1 based on the device ID of the mobile phone F 260, and obtain the device ID of the mobile phone E 250. Therefore, the mobile phone E 250 determines that the file C is located in the mobile phone F 260. The mobile phone E 250 encrypts the device ID of the mobile phone F 260 based on the device ID of the mobile phone F 260 to obtain a ciphertext 2, and replaces the ciphertext 1 in the second global content URI with the ciphertext 2, to obtain a third global content URI, where the third global content URI is content://[user A]:[User B]@[Ciphertext 2]?[2021/8/30 2.30]#[1.1]/[file provider]/[path1]/[10]. The mobile phone E 250 requests to view the file C in the mobile phone F 260 based on the third global content URI.

When receiving the third global content URI sent by the mobile phone E 250, the mobile phone F 260 may successfully decrypt the ciphertext 2 based on the device ID of the mobile phone F 260, and the device ID of the mobile phone F 260 is obtained through decryption. In addition, the mobile phone F 260 successfully authenticates the user A and the user B, and determines that the user A has a permission to access the user B. In this case, the mobile phone F 260 obtains, based on the file provider and the path 1, the file C whose modification time is 2021/8/30 2.30, version information is 1.1, and ID is 10, and responds to the access of the mobile phone E 250 based on the file C. The mobile phone E 250 may display the file C.

Based on a same inventive idea, an embodiment of this application further provides a chip system. The chip system includes a processor, the processor is coupled to a memory, and the processor executes a computer program stored in the memory, to implement the method in the foregoing method embodiment.

The chip system may be a single chip or a chip module including a plurality of chips.

An embodiment of this application further provides a computer-readable storage medium. The computer-readable storage medium stores a computer program, and when the computer program is executed by a processor, the method in the foregoing method embodiments is implemented.

An embodiment of this application further provides a computer program product. When the computer program product is run on an electronic device, the electronic device is enabled to perform the method in the foregoing method embodiments.

When the foregoing integrated unit is implemented in a form of a software function unit and sold or used as an independent product, the integrated unit may be stored in a computer-readable storage medium. Based on such an understanding, all or some of the processes of the method in embodiments of this application may be implemented by a computer program instructing related hardware. The computer program may be stored in a computer-readable storage medium. When the computer program is executed by the processor, steps of the foregoing method embodiments may be implemented. The computer program includes computer program code. The computer program code may be in a source code form, an object code form, an executable file form, some intermediate forms, or the like. The computer-readable storage medium may include at least: any entity or apparatus that can carry computer program code to a photographing apparatus/an electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable medium cannot be the electrical carrier signal or the telecommunications signal according to legislation and patent practices.

In the foregoing embodiments, the description of each embodiment has respective focuses, for a part that is not described in detail or recorded in an embodiment, refer to related descriptions in other embodiments.

Persons of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

In embodiments provided in this application, it should be understood that the disclosed apparatus/device and method may be implemented in another manner. For example, the described apparatus/device embodiments are merely examples. For example, division into the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application refers to any combination and all possible combinations of one or more associated listed items, and includes these combinations.

As used in the specification and the appended claims of this application, the term "if" may be interpreted as "when", "once", "in response to determining", or "in response to detecting" depending on the context. Likewise, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of the specification and claims of this application, the terms "first", "second", "third", and the like are merely intended for the purpose of differentiated description, but shall not be understood as an indication or an implication of relative importance.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "comprise", "have", and their variants all mean "include but are not limited to", unless otherwise specifically emphasized.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A resource access method, applied to a first device and comprising:
obtaining a first resource identity ID;
determining a second device corresponding to the first resource ID, and determining a second resource ID corresponding to the first resource ID, wherein the second resource ID is a local resource ID, in the second device, of a first resource corresponding to the first resource ID; and
accessing, from the second device based on the second resource ID, the first resource corresponding to the first resource ID.

2. The method according to claim 1, wherein the determining a second device corresponding to the first resource ID comprises:
if the first resource ID belongs to a first ID index segment corresponding to the second device, determining that the first resource ID corresponds to the second device.

3. The method according to claim 1 or 2, wherein the determining a second resource ID corresponding to the first resource ID comprises:
determining a second ID index segment corresponding to the first device;
determining an offset between the second ID index segment and the first ID index segment corresponding to the second device; and
offsetting the first resource ID based on the offset to obtain the second resource ID.

4. The method according to claim 1 or 2, wherein the determining a second resource ID corresponding to the first resource ID comprises:
obtaining, from a resource ID correspondence, the second resource ID corresponding to the first resource ID, wherein the resource ID correspondence indicates a correspondence between a local resource ID and a global resource ID, the local resource ID comprises the second resource ID, and the global resource ID comprises the first resource ID.

5. The method according to any one of claims 1 to 4, wherein before the determining a second resource ID corresponding to the first resource ID, the method further comprises:
obtaining metadata of the first resource from the second device, wherein the metadata comprises the second resource ID of the first resource; and
determining the first resource ID corresponding to the second resource ID.

6. The method according to claim 5, wherein before the determining the first resource ID corresponding to the second resource ID, the method further comprises:
allocating the first ID index segment to the second device; and
the determining the first resource ID corresponding to the second resource ID comprises:
determining, based on the first ID index segment, the first resource ID corresponding to the second resource ID.

7. The method according to claim 6, wherein the allocating the first ID index segment to the second device comprises:
allocating the first ID index segment to the second device based on a device type of the second device.

8. The method according to claim 6 or 7, wherein the allocating the first ID index segment to the second device comprises:
obtaining an idle third ID index segment from an index resource pool, wherein the index resource pool comprises at least one third ID index segment; and
determining the idle third ID index segment as the first ID index segment corresponding to the second device.

9. The method according to any one of claims 6 to 8, wherein the allocating the first ID index segment to the second device comprises:
if it is detected that the second device goes online, updating allocation status information of the first ID index segment to "allocated", and adding a device ID of the second device to the allocation status information; and
the method further comprises:
if it is detected that the second device goes offline and no to-be-allocated third device exists, updating the allocation status information of the first ID index segment to "idle", and deleting the device ID of the second device from the allocation status information; or
if it is detected that the second device goes offline but a to-be-allocated third device exists, updating the device ID of the second device in the allocation status information to a device ID of the third device.

10. The method according to any one of claims 1 to 9, wherein the first resource is a multimedia resource, and the obtaining a first resource ID comprises:
if a first obtaining operation is detected, determining the first resource ID and a first quality parameter based on the first obtaining operation, wherein the first obtaining operation is used to obtain a thumbnail of the multimedia resource; and
if the first device does not locally store a first thumbnail, or if the first device locally stores the first thumbnail but picture quality indicated by the first quality parameter is better than picture quality of the first thumbnail, the accessing, from the second device based on the second resource ID, the first resource corresponding to the first resource ID comprises:
obtaining a second thumbnail from the second device based on the second resource ID, wherein picture quality of the second thumbnail is better than or equal to the picture quality indicated by the first quality parameter; and
obtaining a file descriptor FD of the second thumbnail.

11. The method according to claim 10, wherein the method further comprises:
if the first device locally stores the first thumbnail, and the picture quality of the first thumbnail is better than or equal to the picture quality indicated by the first quality parameter, locally obtaining an FD of the first thumbnail from the first device based on the first resource ID.

12. The method according to any one of claims 1 to 9, wherein the first resource is a multimedia resource, and the obtaining a first resource ID comprises:
detecting a second obtaining operation, wherein the second obtaining operation is used to obtain an original picture of the multimedia resource;
before the accessing, from the second device based on the second resource ID, the first resource corresponding to the first resource ID, the method further comprises:
determining that the first device does not locally store cached data of the multimedia resource; and
the accessing, from the second device based on the second resource ID, the first resource corresponding to the first resource ID comprises:
obtaining the cached data of the multimedia resource from the second device based on the second resource ID.

13. The method according to claim 12, wherein the method further comprises:
obtaining a logical FD of the multimedia resource.

14. The method according to any one of claims 1 to 13, wherein the accessing, from the second device based on the second resource ID, the first resource corresponding to the first resource ID comprises:
generating a first global content uniform resource identifier URI based on the second resource ID; and
accessing the first resource from the second device based on the first global content URI.

15. The method according to claim 14, wherein the first global content URI carries at least one of a first modification time and first version information, the first modification time indicates a modification time of the first resource, and the first version information indicates a version of the first resource.

16. The method according to claim 14 or 15, wherein the first global content URI carries at least one of a first access account and a first target account, the first access account indicates a user identity that accesses the first resource, and the first target account indicates a user identity to which the first resource belongs.

17. The method according to any one of claims 14 to 16, wherein the first global content URI carries a first encrypted device ID, and the first encrypted device ID is obtained by the first device by encrypting the device ID of the second device based on the device ID of the second device.

18. The method according to any one of claims 1 to 17, wherein the method further comprises:
obtaining a second global content URI;
adding at least one of a second access account, a second target account, a second encrypted device ID, a second modification time, and second version information to the second global content URI, to obtain a third global content URI; and
accessing a second resource from a fourth device based on the third global content URI,
wherein
the second access account indicates a user identity that accesses the second resource, the second target account indicates a user identity to which the second resource belongs, the second modification time indicates a modification time of the second resource, the second version information indicates a version of the second resource, and the second encrypted device ID is obtained by the first device by encrypting a device ID of the fourth device based on the device ID of the fourth device.

19. The method according to claim 18, wherein the second global content URI comprises a third encrypted device ID, and before the adding a second encrypted device ID to the second global content URI, the method further comprises:
decrypting the third encrypted device ID based on device IDs of a plurality of online fifth devices; and
if the third encrypted device ID is successfully decrypted based on the device ID of the fourth device, and a device ID of the first device is obtained through decryption, encrypting the device ID of the fourth device based on the device ID of the fourth device, to obtain the second encrypted device ID, wherein the fourth device is any one of the plurality of fifth devices; and
the adding a second encrypted device ID to the second global content URI comprises:
updating the third encrypted device ID in the second global content URI to the second encrypted device ID.

20. The method according to claim 18 or 19, wherein the adding a second access account to the second global content URI comprises:
if the second global content URI does not comprise a third access account, adding the second access account to the second global content URI.

21. The method according to any one of claims 18 to 20, wherein the adding a second target account to the second global content URI comprises:
if the second global content URI does not comprise a third target account, adding the second target account to the second global content URI.

22. The method according to any one of claims 18 to 21, wherein the adding a second modification time and/or second version information to the second global content URI comprises:
if the second global content URI does not comprise a third modification time, adding the second modification time to the second global content URI; and/or
if the second global content URI does not comprise third version information, adding the second version information to the second global content URI.

23. An electronic device, comprising a memory and a processor, wherein the memory is configured to store a computer program, and the processor is configured to perform the method according to any one of claims 1 to 22 when invoking the computer program.

24. A computer-readable storage medium, wherein the computer-readable storage medium stores a computer program, and when the computer program is executed by a processor, the method according to any one of claims 1 to 22 is implemented.
